# EUROPEAN PATENT SPECIFICATION

(11) **EP 3 129 946 B1**
(45) Date of publication and mention of the grant of the patent: **26.12.2018**
(21) Application number: 15776143.8
(22) Date of filing: 06.04.2015
(51) Int. Cl.: G06Q 50/10

(54) **REMOTE MAINTENANCE SERVER, TOTAL MAINTENANCE SYSTEM INCLUDING THE REMOTE MAINTENANCE SERVER AND METHOD THEREOF**
FERNWARTUNGSSERVER, KOMPLETTWARTUNGSSYSTEM MIT DEM FERNWARTUNGSSERVER UND VERFAHREN DAFÜR
SERVEUR DE MAINTENANCE À DISTANCE, SYSTÈME DE MAINTENANCE TOTAL COMPRENANT LE SERVEUR DE MAINTENANCE À DISTANCE ET PROCÉDÉ CORRESPONDANT

(30) Priority: 11.04.2014 KR 20140043797
(43) Date of publication of application: 15.02.2017
(73) Proprietor: LG Electronics Inc., Seoul 07336 (KR)
(72) Inventor: JUNG, Seunghwan, Seoul 153-802 (KR); LEE, Sangwoo, Seoul 153-802 (KR); KIM, Juntae, Seoul 153-802 (KR)
(74) Representative: Vossius & Partner Patentanwälte Rechtsanwälte mbB
(86) International application number: PCT/KR2015/003426
(87) International publication number: WO 2015/156557

(56) References cited:
- EP-A1- 2 056 032
- EP-A2- 1 335 166
- JP-A- 2003 090 587
- JP-A- 2004 198 102
- US-A1- 2004 204 793
- US-A1- 2004 255 601
- US-A1- 2008 048 045
- US-A1- 2008 306 632
- US-A1- 2009 057 429
- US-A1- 2009 057 429
- US-A1- 2012 187 201
- US-A1- 2014 012 543

## Description

### Technical Field

The present disclosure relates to a remote total maintenance system (TMS) and a remote maintenance method for remotely maintaining a plurality of control regions (or control sites) provided with a facility consuming energy.

### Background Art

In recent years, the need for a remote maintenance system (remote total maintenance system (TMS)) for remotely maintaining a plurality of control regions (control sites, maintenance points) provided with a facility consuming energy has been recognized.

Here, the plurality of control regions may be structures or buildings disposed at various locations.

In case of conventional structure or buildings, as facilities provided therein are modernized, automatic control systems for automatically controlling sub-systems (facilities or apparatuses) such as power, lighting, conditioning, fire, security, and the like are expanded.

In line with that, the development of central monitoring systems such as a building management system (BMS) capable of managing sub-systems in a totally integrated manner have been actively carried out.

However, the role of such a building management system is concentrated on controlling the functions of facilities provided in one building.

Accordingly, a management system for maintaining, repairing facilities provided in each building and managing an amount of energy (or power) consumption thereof is needed, and in particular, a remote total maintenance system for remotely managing a plurality of controls sites in an integrated manner has been required.

However, there is a problem that a remote total maintenance system in the related art is unable to provide a power saving feature capable of efficiently saving energy or electricity consumption for the plurality of control sites, respectively.

EP 1 335 166 A2 relates to an operation information processing section in a central remote controller processes operation information from operation setting buttons, each of which is independent in function, transmits the operation information through a transmission line, and generates screen information based on the operation information collected through the transmission line, and display the screen information on a display unit. A management information processing section generates screen information based on operation information of the air conditioners collected through the transmission line and transmits the screen information to the remote monitor terminal through a transmission line, and relays control information transmitted from the remote monitor terminal through the transmission line, and transmits the control information to the air conditioners through the transmission line.

### Disclosure of Invention

### Technical Problem

An aspect of the present disclosure is to provide a remote maintenance server for detecting a first indoor unit being continuously operated for a specific time period or a second indoor unit being operated for a non-operating time period corresponding to at least one maintenance point among a plurality of indoor units when a waste operation mode is activated, and transmitting a control command for controlling the operation of the detected first indoor unit or second indoor unit to the at least one maintenance point to efficiently maintain electricity consumption on the plurality of indoor units, and a remote total maintenance system and a remote maintenance method including the same.

### Solution to Problem

In order to accomplish the foregoing objects, there is provided a remote maintenance server according to claim 1.

According to an example associated with the present disclosure, the at least one maintenance point may be a region corresponding to at least one of a structure, a building, a store, a mall and a school, which are maintained, repaired and managed by the remote maintenance server.

According to an example associated with the present disclosure, the controller may stop the operation of the first indoor unit and the second indoor unit through the control command or control at least one of an operation rate, a set temperature for the plurality of indoor units and a compression capacity of a compressor contained in the air conditioner according to a control setting value.

According to an example associated with the present disclosure, the operation rate may be a ratio between a number of the plurality of indoor units and a number of operated indoor units among the plurality of indoor units.

According to an example associated with the present disclosure, the controller may adjust an operation frequency of the compressor to control the compression capacity.

According to an example associated with the present disclosure, the specific time period may be 10 hours.

According to an example associated with the present disclosure, the remote maintenance server may further include a display unit configured to display a maintenance screen for maintaining the at least one maintenance point.

According to an example associated with the present disclosure, the display unit may display control information, which is information associated with at least one of a control state and a control result in which at least one of whether or not the operation of the first indoor unit or the second indoor unit is stopped, the control setting value, the operation rate, the set temperature and the compression capacity is controlled, in a first region on the maintenance screen.

According to an example associated with the present disclosure, the display unit may display a control setting UI, which is a graphic user interface (GUI) for receiving a user input activating the waste operation mode, the specific time period, the non-operating time period and the control setting value, in a second region on the maintenance screen.

According to an example associated with the present disclosure, the display unit may display a plurality of indoor unit indicators indicating the plurality of indoor units, respectively, in a third region on the maintenance screen, and the controller may display a waste indicator indicating that power is wasted within an indoor unit indicator indicating the first indoor unit or the second indoor unit among the plurality of indoor unit indicators when the first indoor unit or the second indoor unit is detected.

According to an example associated with the present disclosure, the communication unit may perform communication with a local controller provided at the at least one maintenance point, respectively, to control the air conditioner, and the controller may control the air conditioner through the local controller.

According to an example associated with the present disclosure, the communication unit may perform communication with the local controller in a first communication mode, and the local controller may perform communication with the air conditioner in a second communication mode.

According to an example associated with the present disclosure, the first communication mode may be at least one of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax), and the second communication mode may be RS-485.

In order to accomplish the foregoing objects, a remote total maintenance system according to present disclosure may include at least one maintenance point provided with an air conditioner having a plurality of indoor units performing air conditioning and at least one outdoor unit connected to the indoor units to drive the indoor units; and a remote maintenance server configured to remotely maintain the at least one maintenance point, wherein the remote maintenance server is a remote maintenance server according to the foregoing embodiments.

In order to accomplish the foregoing objects, a remote maintenance method by a remote maintenance server for remotely maintaining at least one maintenance point provided with an air conditioner having a plurality of indoor units performing air conditioning and at least one outdoor unit connected to the indoor units to drive the indoor units includes the steps of claim 12.

According to an example associated with the present disclosure, the at least one maintenance point may be a region corresponding to at least one of a structure, a building, a store, a mall and a school, which are maintained, repaired and managed by the remote maintenance server.

According to an example associated with the present disclosure, the at least one maintenance point may stop the operation of the first indoor unit and the second indoor unit through the control command or control at least one of an operation rate, a set temperature for the plurality of indoor units and a compression capacity of a compressor contained in the air conditioner according to a control setting value.

According to an example associated with the present disclosure, the operation rate may be a ratio between a number of the plurality of indoor units and a number of operated indoor units among the plurality of indoor units.

According to an example associated with the present disclosure, the compression capacity may adjust an operation frequency of the compressor.

According to an example associated with the present disclosure, the specific time period may be 10 hours.

According to an example associated with the present disclosure, the remote maintenance method may further include displaying a maintenance screen for maintaining the at least one maintenance point.

According to an example associated with the present disclosure, the remote maintenance method may further include displaying control information, which is information associated with at least one of a control state and a control result in which at least one of whether or not the operation of the first indoor unit or the second indoor unit is stopped, the control setting value, the operation rate, the set temperature and the compression capacity is controlled, in a first region on the maintenance screen.

According to an example associated with the present disclosure, the remote maintenance method may further include displaying a control setting UI, which is a graphic user interface (GUI) for receiving a user input activating the waste operation mode, the specific time period, the non-operating time period and the control setting value, in a second region on the maintenance screen.

### Advantageous Effects of Invention

A remote maintenance server according to an embodiment disclosed herein, and a remote maintenance system and a remote maintenance system including the same may detect a first indoor unit being continuously operated during a specific time period or a second indoor unit being operated during a non-operating time period corresponding to at least one maintenance point among the plurality of indoor units when a waste operation mode is activated, and transmit a control command for controlling the operation of the detected first indoor unit or second indoor unit to the at least one maintenance point to efficiently maintain an amount of electricity consumption for the plurality of indoor units, thereby obtaining an advantage that power consumed by their control sites can be reduced.

### Brief Description of Drawings

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a conceptual view in the aspect of relationship between constituent elements illustrating a remote total maintenance system according to an embodiment disclosed in the present disclosure;
FIG. 1B is a conceptual view in the aspect of geographical location relationship between constituent elements illustrating a remote total maintenance system according to an embodiment disclosed in the present disclosure;
FIG. 2 is a configuration diagram illustrating the configuration of a remote maintenance system according to an embodiment disclosed in the present disclosure;
FIG. 3 is an exemplary view illustrating a specific connection relationship between a local controller and facilities or apparatuses in a remote total maintenance system according to an embodiment disclosed in the present disclosure;
FIG. 4 is an exemplary view specifically illustrating a connection structure between a remote maintenance server and a plurality of local controllers in a remote total maintenance system according to an embodiment disclosed in the present disclosure;
FIG. 5 is a configuration diagram illustrating the configuration of a remote maintenance server according to an embodiment disclosed in the present disclosure;
FIG. 6 is an exemplary view illustrating a method of detecting an indoor unit being operated in a waste manner during a non-operating time period according to an embodiment disclosed in the present disclosure;
FIG. 7 is an exemplary view illustrating a method of detecting an indoor unit being continuously operated during a specific time period to show a waste operation state according to an embodiment disclosed in the present disclosure;
FIGS. 8 through 10 are exemplary views illustrating a maintenance screen of a remote maintenance server according to an embodiment disclosed in the present disclosure;
FIG. 11 is a flow chart illustrating a remote maintenance method according to an embodiment disclosed in the present disclosure;
FIG. 12 is an exemplary view illustrating an external terminal connected to a remote maintenance server according to an embodiment disclosed in the present disclosure; and
FIG. 13 illustrates a configuration in which a terminal is implemented in a mobile terminal form according to the embodiments disclosed in the present disclosure.

### Mode for the Invention

Technologies disclosed in the present disclosure may be applicable to a remote total maintenance system (TMS) for remotely maintaining a plurality of control regions (control sites, maintenance points) provided with a facility consuming energy.

Furthermore, technologies disclosed in the present disclosure may be also applicable to a portable device or terminal connected to the remote total maintenance system or remote maintenance server in a wired or wireless manner to remotely maintain maintenance points.

The portable device or terminal may denote a terminal in a broad sense, and may denote various devices or apparatuses, such as a digital television (TV), a smart TV, a smart phone, a portable terminal, a mobile terminal, a personal digital assistant (PDA), a portable multimedia player (PMP) terminal, a laptop computer, a Wibro terminal, an internet protocol television terminal (IPTV), a digital broadcast terminal, a telematics terminal, a navigation terminal, an audio video navigation terminal, a television, a 3D television, an audio/video (A/V) system, a home theater system, an information providing center, a call center, and the like.

The control region, control site or maintenance point may denote a maintenance object that should be collectively maintained by the center (or headquarter) or a maintenance point that should be maintained, repaired and managed by a remote maintenance server, and may have a broad concept including a structure, a building, a store, a mall and a school, and the like.

The store may denote a place where a certain article is bought and sold, and for example, the store may include a shop, a bakery, a convenience store, and the like.

Accordingly, technologies disclosed in the present disclosure may be also applicable to a remote maintenance server, a chain store maintenance system and a store maintenance method for maintenance, repair and energy management on facilities provided in a store.

The store has a concept including a chain store corresponding to a store organization for controlling a plurality of shops dealing with a plurality of goods from the center.

Accordingly, technologies disclosed in the present disclosure may be also applicable to a remote maintenance server, a chain store maintenance system and a store maintenance method for maintenance, repair and energy management on chain stores.

The main purpose of a remote maintenance server or remote maintenance system according to an embodiment disclosed in the present disclosure is to perform a maintenance and repair function for facilities or apparatuses provided in the control region.

Accordingly, the remote maintenance server or remote maintenance system may monitor the facility status of facilities to perform a maintenance and repair function on the facilities provided in the control region, thereby detecting the fault status of the facilities and carrying out maintenance on a faulty facility.

Furthermore, the remote maintenance server or remote maintenance system may perform the role of writing a report on the status of the facilities, giving an alarm on a faulty facility, and storing long-term data associated with the status of the facilities.

Furthermore, the remote maintenance server or remote maintenance system may perform a function of maintaining an amount of energy or power consumption of the facilities.

Accordingly, the remote maintenance server or remote maintenance system may perform the role of an energy maintenance system used to manage energy associated with facilities provided at a plurality of maintenance points, respectively, thereby enhancing energy performance while maintaining a comfortable indoor environment within the plurality of maintenance points.

It should be noted that technological terms used herein are merely used to describe a specific embodiment, but not to limit the present invention. Also, unless particularly defined otherwise, technological terms used herein should be construed as a meaning that is generally understood by those having ordinary skill in the art to which the invention pertains, and should not be construed too broadly or too narrowly. Furthermore, if technological terms used herein are wrong terms unable to correctly express the concept of the invention, then they should be replaced by technological terms that are properly understood by those skilled in the art. In addition, general terms used in this invention should be construed based on the definition of dictionary, or the context, and should not be construed too broadly or too narrowly.

Incidentally, unless clearly used otherwise, expressions in the singular number include a plural meaning. In this application, the terms "comprising" and "including" should not be construed to necessarily include all of the elements or steps disclosed herein, and should be construed not to include some of the elements or steps thereof, or should be construed to further include additional elements or steps.

Furthermore, in the present disclosure, the terms including an ordinal number such as first, second, etc. can be used to describe various elements, but the elements should not be limited by those terms. The terms are used merely for the purpose to distinguish an element from the other element. For example, a first element may be named to a second element, and similarly, a second element may be named to a first element without departing from the scope of right of the invention.

Hereinafter, the embodiments disclosed herein will be described in detail with reference to the accompanying drawings, and the same or similar elements are designated with the same numeral references regardless of the numerals in the drawings and their redundant description will be omitted.

In describing the present disclosure, moreover, the detailed description will be omitted when a specific description for publicly known technologies to which the invention pertains is judged to obscure the gist of the present invention. Also, it should be noted that the accompanying drawings are merely illustrated to easily explain the concept of the invention, and therefore, they should not be construed to limit the technological concept disclosed herein by the accompanying drawings.

### Description of remote total maintenance system

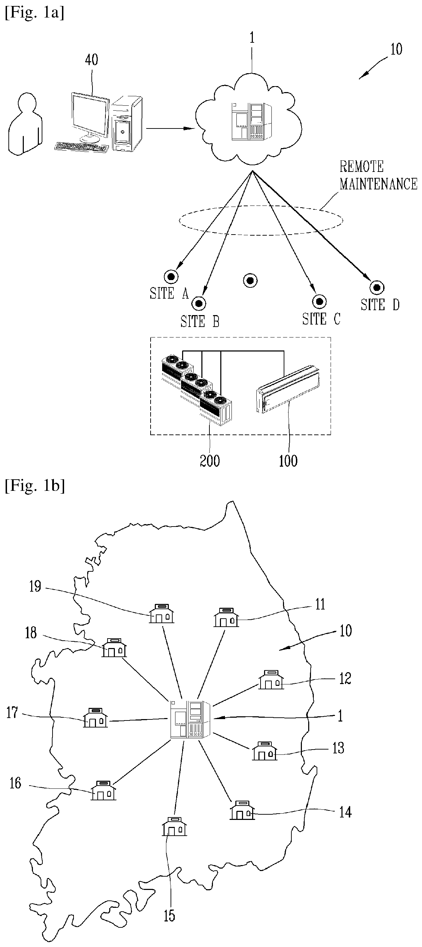

Hereinafter, a remote total maintenance system (or remote maintenance system) according to an embodiment disclosed in the present disclosure will be described in detail with reference to FIGS. 1 through 4.

However, a remote total maintenance system disclosed in FIGS. 1 through 4 is only illustrative, and it should be understood by those skilled in the art that technologies disclosed in the present disclosure can be applicable to various types of remote maintenance systems, point maintenance systems, store maintenance systems or chain store maintenance systems.

FIGS. 1A and 1B are conceptual views illustrating a remote total maintenance system according to an embodiment disclosed in the present disclosure.

FIG. 1A is a conceptual view in the aspect of relationship between constituent elements illustrating a remote total maintenance system according to an embodiment disclosed in the present disclosure.

Referring to FIG. 1A, a remote total maintenance system 10 according to an embodiment of the present disclosure may include at least one facility 200 consuming energy, a local controller 100 configured to control or maintain the at least one facility 200, and a remote maintenance server 1.

The remote maintenance server 1 may perform the role of maintaining, repairing and managing at least one control region, control side or maintenance point (site A ∼ site D).

Each of the at least one control region (site A ∼ site D) may include the at least one facility 200 consuming energy or power.

Furthermore, the at least one control region (site A ∼ site D) may include a local controller 100 for controlling or managing the at least one facility.

The remote maintenance server 1 may remotely monitor the status of at least one facility 200 provided in the at least one control region (site A ∼ site D), respectively, thereby performing a maintenance, repair and management function on the at least one facility 200.

Here, the status of the at least one facility 200 may be a status associated with at least one of a control setting state, an operation state and a fault state corresponding to the at least one facility 200.

Here, the control setting state may denote a control attribute or control parameter on the at least one facility 200 and denote a variable having various control objects under the control of the facility.

For example, when the facility is an air conditioner, the control setting, control attribute or control parameter may be a target temperature (or set temperature), an upper limit temperature, a lower limit temperature, a flow rate, whether it is running or stopped, and the like.

Furthermore, for example, when the facility is a lighting fixture, the control setting, control attribute or control parameter may be illumination, brightness, and the like.

The remote maintenance server 1 may detect a fault status or the like of the at least one facility 200. In this case, the remote maintenance server 1 may acquire status information on the at least one facility 200 from the local controller 100.

When a specific facility of the at least one facility 200 is failed, the remote maintenance server 1 may access a service center (specifically, service center server) (not shown) providing a service for repairing the facility to request a repair work so as to carry out repair on the specific facility.

Upon receiving a request for the repair work, the service center may carry out a work for dispatching a service technician for repair work to a control site provided with the specific facility.

Communication between the remote maintenance server 1 and the local controller 100 may be carried out in various communication modes or communication protocols.

For example, the remote maintenance server 1 and the local controller 100 may perform communication in at least one communication mode or communication protocol of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax).

Communication between the local controller 100 and the at least one facility 200 may be carried out in various communication modes or communication protocols.

For example, the local controller 100 and the at least one facility 200 may perform communication via RS-485.

Furthermore, the remote maintenance system 10 may further include an additional terminal 40 connected to the remote maintenance server 1 in a wired or wireless manner.

A user or administrator of the remote maintenance system 10 may access the remote maintenance server 1 through the additional terminal 40 to remotely maintain the at least one control region (site A ∼ site D).

The additional terminal 40 may denote a terminal in a broad sense to have a concept containing a portable terminal. For example, the additional terminal 40 may denote various devices or apparatuses, such as a personal computer, a digital television (TV), a smart TV, a smart phone, a portable terminal, a mobile terminal, a personal digital assistant (PDA), a portable multimedia player (PMP) terminal, a laptop computer, a Wibro terminal, an internet protocol television terminal (IPTV), a digital broadcast terminal, a telematics terminal, a navigation terminal, an audio video navigation terminal, a television, a 3D television, an audio/video (A/V) system, a home theater system, an information providing center, a call center, and the like.

FIG. 1B is a conceptual view in the aspect of geographical location relationship between constituent elements illustrating a remote total maintenance system according to an embodiment disclosed in the present disclosure.

Referring to FIG. 1B, the remote total maintenance system 10 according to an embodiment of the present disclosure may perform a function of remotely maintaining control regions, control sites or maintenance points (11-19) disposed at various locations across the country.

The remote maintenance system 10 may include at least one control region (11-19) provided with a facility (or facility device) consuming energy, and the remote maintenance server 1 configured to maintain the at least one control region (11-19).

The at least one control region (11-19) may correspond to site A through site D illustrated in FIG. 1A.

The remote maintenance system 10 may having a structure in which the at least one control region (11-19) are mutually connected across the country.

As illustrated in FIG. 1B, the remote maintenance system 10 may form one network in which the at least one control region (11-19) provided with a facility device are distributed over a broad region, and connected to the remote maintenance server 1.

Here, the remote maintenance system 10 may further include a regional server (not shown) connected to at least one specific control region of the at least one control region (11-19) to maintain the specific control region, and connected to the remote maintenance server 1.

The regional server may be an additional server for relaying data between the specific control region and the remote maintenance server 1 or any one of the plurality of control regions may be operated as a server.

Here, each of the control regions (11-19) may be distributed across the country or in some areas.

Furthermore, each of the control regions (11-19) may be connected to the remote maintenance server 1, and the remote maintenance server 1 may monitor a plurality of control regions to maintain the operation.

For example, each control region may denote a maintenance object that should be collectively maintained by the center (or headquarter) or a maintenance point that should be maintained, repaired and managed by a remote maintenance server, and may have a broad concept including a structure, a building, a store, a mall and a school, and the like.

For example, when the control region is a store, the control region may be a chain store such as a convenience store, a bakery, and the like.

The remote maintenance system 10 may form at least one control region (11-19) provided with an air conditioner as well as other facility devices as a network as illustrated in FIG. 1B, thereby allowing the remote maintenance server 1 to maintain and control a plurality of control regions distributed thereover.

Here, the remote maintenance system 10 may maintain consumption power (or energy consumption) for each point in a national level as well as in a regional level, and moreover, broadly maintain it over a wide range including a plurality of countries.

Each of the at least one control region (11-19) may include one or more facilities (or facility devices) and apparatuses.

As a facility (or sub-system) provided within the control region, the facility may denote an air conditioner, a ventilator, an air conditioning unit (air handling unit), a fan, a boiler, a cooling tower, a pump, a temperature/humidity sensor, a chiller unit, a lighting fixture, a power device, a refrigerator, a freezer, a showcase, a fire system, and the like.

Furthermore, when a cooling tower system is used as a facility, for example, the apparatus may denote a cooling tower, a pump, a temperature sensor, and the like.

According to an embodiment disclosed in the present disclosure, the remote maintenance server 1 may acquire information on an amount of energy consumption during a specific time period in the at least one control region (11-19).

Here, the specific time period may be specified or set by the user.

Furthermore, the specific time period may be specified in the unit of days, weeks or months.

For example, the remote maintenance server 1 may acquire information on the amount of energy consumption per each day. Furthermore, for example, the remote maintenance server 1 may acquire information on an amount of energy consumption from January 1 to January 20.

According to an embodiment, the remote maintenance server 1 may divide the at least one control region (11-19) into at least one group (control group, maintenance group, family, control family or maintenance family) based on a specific classification criterion.

There may be a plurality of specific classification criteria. Accordingly, when there is a plurality of specific classification criteria, classification into the at least one group may be carried out on the basis of the foregoing multidimensional clustering techniques.

The classification criterion may be a classification criterion according to regional characteristics (characteristics for a control site or maintenance point) for the at least one control region (11-19).

According to an embodiment, the regional characteristics may include at least one of a static attribute and a dynamic attribute of the control region.

The static attribute may be at least one of a size of the at least one control region (11-19), a location of the at least one control region (11-19), and a facility capacity for a facility installed (or provided) in the at least one control region (11-19).

For example, an attribute for the size of the at least one control region (11-19) may denote an area, a floor height, a number of floors, and a window width, and the like of the region.

Furthermore, for example, an attribute for the location of the at least one control region (11-19) may denote a direction (east, west, south, north), a latitude, a longitude and geographical location, and the like, at which the at least one control region (11-19) is located.

Furthermore, for example, the facility capacity for a facility may denote a number of lighting fixtures, a power consumption of lighting fixture, a number of air conditioners, a capacity of air conditioner, a number of refrigeration facilities, a capacity of refrigeration facility, and the like.

Furthermore, the dynamic attribute may be weather information corresponding to a point (or region) at which the at least one control region (11-19) is located.

For example, the dynamic attribute may include at least one of daily average ambient temperature, maximum ambient temperature and minimum ambient temperature, rainfall, snowfall and cloudiness corresponding to a point (or region) at which the at least one control region (11-19) is located.

Specifically, the remote maintenance server 1 may divide the at least one control region (11-19) into a plurality of groups based on a store size (area) and a scale of lighting (number of lighting fixtures).

For example, the remote maintenance server 1 may divide the at least one control region (11-19) into a large-scale group (first group) with a large size of the control region and a large scale of the lighting, a medium-scale group (second group) with a medium size of the control region and a medium scale of the lighting, and a small-scale group (third group) with a small size of the control region and a small scale of the lighting.

In this case, each of the first to the third group may include at least one control region corresponding to this.

According to an embodiment, there may be a plurality of the classification criteria.

For example, the classification criteria may include a plurality of classification criteria for the foregoing static attribute and dynamic attribute of a control region.

In this case, the remote maintenance server 1 may apply a multidimensional clustering technique to classify the at least one control region (11-19) into the at least one group according to the plurality of classification criteria.

The multidimensional clustering technique may be carried out in various ways.

For example, the multidimensional clustering technique may be a K-means clustering technique.

The K-means clustering technique may denote a classification or clustering method of selecting a number (k) of individual clusters and criterion thereof from a plurality of data sets, and allowing the means close to the relevant criterion to belong to the relevant cluster.

In addition, it should be clearly understood by those skilled in the art that various clustering techniques can be applicable to a technology disclosed in the present disclosure.

According to an embodiment, classification into the at least one group may be carried out in various requests.

For example, the remote maintenance server 1 may periodically perform the classification work according to a user request (or user input).

Furthermore, for example, the remote maintenance server 1 may perform the classification work according to the need, and specifically for example, the remote maintenance server 1 may automatically perform the classification work when a new control region, control site or maintenance point is added.

Furthermore, for example, the remote maintenance server 1 may periodically perform the classification. Specifically, for example, the remote maintenance server 1 may perform the classification in the unit of days, weeks or months.

Considering a specific scenario of the execution of group classification according to an embodiment disclosed in the present disclosure, the remote maintenance server 1 may classify control regions into groups according to a static attribute of the foregoing classification criteria.

It is because the static attribute is not a frequently modified or changed classification criterion in terms of time, and classification is carried out only when registering a new control region.

Furthermore, the remote maintenance server 1 may reclassify the control regions in the unit of days on the basis of a classification result based on the dynamic attribute according to a dynamic attribute of the foregoing classification criteria.

It is because the dynamic attribute has a characteristic of being changed in the unit of days and periodic classification is required.

Finally, the remote maintenance server 1 may generate a control command in the unit of groups based on a final group sequentially classified based on the static attribute and the dynamic attribute to control energy or power consumption in the unit of groups.

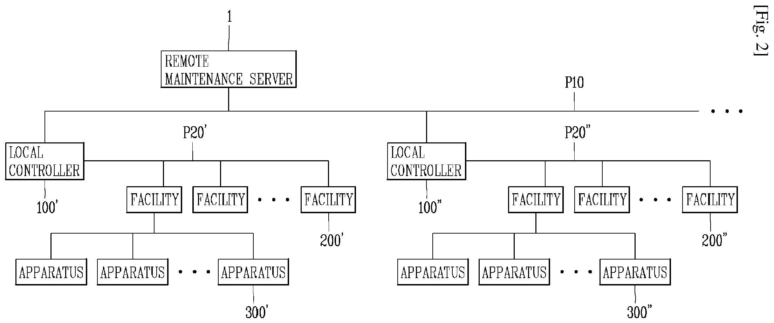

FIG. 2 is a configuration diagram illustrating the configuration of a remote maintenance system according to an embodiment of the present disclosure.

Referring to FIG. 2, the remote maintenance system (or remote total maintenance system) 10 according to an embodiment of the present disclosure may include a remote maintenance server 1, a local controller 100', 100" connected to the remote maintenance server 1 via a communication network, at least one facility 200', 200" and apparatus 300', 300".

As a sub-system constituting the remote maintenance system 10, the facility 200', 200" may denote an air conditioner, a ventilator, an air conditioning unit, a fan, a boiler, a cooling tower, a pump, a temperature/humidity sensor, a freezer, a lighting fixture, a power device, a fire system, and the like.

Furthermore, when a cooling tower system is used as a facility, for example, the apparatus 300', 300" may denote a cooling tower, a pump, a temperature senor, and the like.

As a device for comprehensively controlling, monitoring or maintaining the entire situation of a building, the remote maintenance server 1 may include the facilities 200', 200", for example, additional terminals for machine equipment, lighting, power, access control, disaster prevention, parking management, facilities management, and the like.

The remote maintenance server 1 may be an automatic server for sharing information with the local controller 100', 100" through network communication, and controlling, monitoring or maintaining the facility 200', 200" and apparatus 300', 300" contained therein.

Here, the first local controller 100' and the second local controller 100" may denote local controllers provided at different control regions, control sites or maintenance points, respectively.

According to an embodiment disclosed in the present disclosure, the remote maintenance server 1 may collect information on facilities provided or disposed in the control regions, respectively, to efficiently maintain, repair or manage each of the control regions, respectively.

For the purpose of this, the remote maintenance server 1 may provide a user interface or input/output screen capable of receiving a user input and displaying the maintenance or repair process for a facility according to the user input and processing result thereof.

The control region, control site or maintenance point may denote a maintenance object that should be collectively maintained by the center (or headquarter) or a maintenance point that should be maintained, repaired and managed by a remote maintenance server, and may have a broad concept including a structure, a building, a store, a mall and a school, and the like.

Here, the structure or building may denote an architectural structure, and may denote a mall, a convenience store, a store, a home, an office, an officetel, a factory building, a school, a hospital building, or the like.

The local controller 100', 100" may be connected to the remote maintenance server 1 via a communication network to execute a management program received from the remote maintenance server 1.

The local controller 100', 100" may be referred to as an advanced control platform (ACP) due to the role of maintaining, repairing, controlling and managing the facilities 200', 200" within the control region.

Furthermore, the local controller 100', 100" may communicate and exchange information with the remote maintenance server 1, and receive and execute the management program or a control command according to the management program to control the facilities 200', 200".

Furthermore, the local controller 100', 100" may write or store facility-related information such as control output and status change of facilities within a control region through one or more apparatuses 400, 400' provided in the facilities 200', 200", for example, sensors and manipulation devices, respectively.

The local controller 100', 100" may be a microcomputer configured to control, maintain or monitor the facility 200', 200" or apparatus 300', 300" according to the management program, for example.

In other words, the local controller 100', 100" may be connected to the remote maintenance server 1 via a communication network (P10) to transmit and receive required information with each other.

Accordingly, the local controller 100', 100" may directly control an input/output signal of the facility 200', 200" or apparatus 300', 300" to monitor, maintain or control air conditioning and other facilities provided in the control region.

Specifically, the local controller 100', 100" may be connected between the remote maintenance server 1 and the one or more facilities 200', 200" to receive a management program or a control command according to the management program to execute it.

Furthermore, the local controller 100', 100" may transmit the execution result to the remote maintenance server 1. To this end, the remote maintenance server 1 may include a communication unit as a device for transmitting the management program or a control command according to the management program and receiving an execution result according to the management program or a control command according to the management program from the local controller 100', 100".

The local controller 100', 100" may further include a display unit as a device for displaying the execution result on a user screen.

The remote maintenance server 1 and the local controller 100', 100" may be connected to each other via a communication network (P10).

According to an embodiment disclosed in the present disclosure, the communication network may include various communication protocols.

For example, the remote maintenance server 1 and the local controller 100', 100" may be at least one of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax).

Furthermore, according to an embodiment, the local controller 100', 100" may be connected to the facilities 200', 200" trough a communication network (P20', P20").

For example, the local controller 100', 100" may be connected to the facilities 200', 200" based on RS-485.

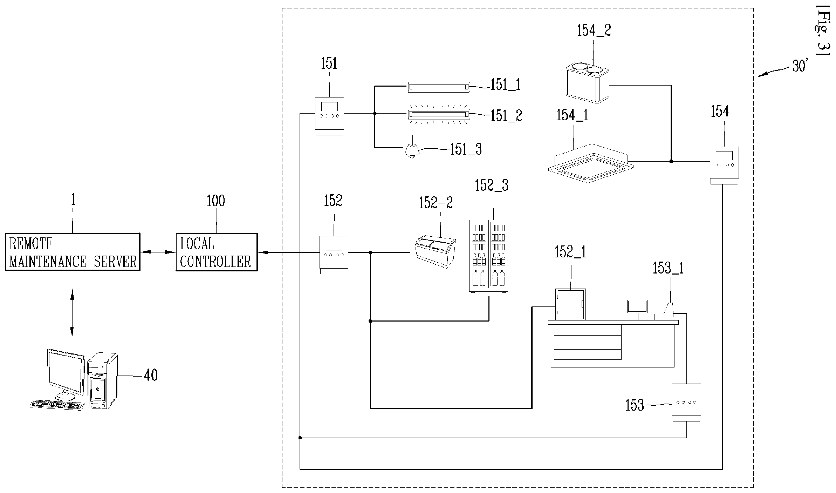

FIG. 3 is an exemplary view illustrating a specific connection relationship between a local controller and facilities or apparatuses in a remote total maintenance system (remote maintenance system) according to an embodiment disclosed in the present disclosure.

Referring to FIG. 3, the remote maintenance server 1 may be connected to the local controller 100 as described above.

Furthermore, the remote maintenance server 1 may include a terminal 40 that accesses the remote maintenance server 1 from the outside.

Furthermore, a heating and cooling device, such as an air conditioner, a cooler, a heating cabinet or the like, a lighting fixture and a security device may be provided within one maintenance point or control region 30'.

Furthermore, a plurality of power meters 151 to 154 connected to the facility devices, respectively, to measure an amount of power consumption.

Here, indoor units 154-1, 151-1, 151-2, an outdoor unit 154-2, a refrigerator 152-3, a show case 152-2, a heating cabinet 152-1, a calculator 153-1, a lighting fixture 151-3 may be provided in the store.

A plurality of indoor units 154-1, 151-1, 151-2 may perform air conditioning in a room, and the plurality of indoor units may be operated in a single or combined manner according to their indoor air-conditioning loads.

Furthermore, an air conditioner may further include a unit such as a ventilator, an air purifier, a dehumidifier, a humidifier and the like in addition to the indoor units and outdoor units, but an example in which indoor units and output units are installed therein will be described below, and the number of indoor units and output units may not be necessarily limited to the drawing.

Here, the indoor unit may include an indoor heat exchanger (not shown), an indoor fan (not shown), an expansion valve (not shown) configured to expand refrigerant supplied, and a plurality of sensors (not shown).

Furthermore, the output unit may include a compressor (not shown) configured to receive and compress refrigerant, a heat exchanger (not shown) configured to exchange heat between refrigerant and outdoor air, an accumulator (not shown) configured to extract gaseous refrigerant from the supplied refrigerant and supply it to the compressor, and a 4-way valve (not shown) configured to select a passage of refrigerant according to a heating operation.

At least one lighting fixture 151-3 may be installed, and controlled by a switch connected thereto.

The refrigerator 152-3 or show case 152-2 may maintain the inside at a preset temperature to store foods.

The show case 152-2 may expose cool air according to its cooling cycle to decrease its internal temperature.

The heating cabinet 152-1 may maintain its internal temperature above a predetermined temperature, thereby maintaining things therewithin to be warm.

Furthermore, the calculator 153-1 may manage cash and issue a receipt.

For facility devices provided at a point in such a manner, data and information on power consumption for each device in an operation state for each device may be maintained through the local controller 100 (or point controller) within the maintenance point or control region.

As a device for comprehensively controlling, maintaining or monitoring the entire situation of a control region, the local controller 100 may include facility devices provided or installed in the control region, for example, additional terminals for machine equipment, lighting, power, access control, disaster prevention, parking management, facilities management, and the like.

The local controller 100 may store energy data measured and entered from power meters 151 to 154, and store control data on each device and data on the operation state.

Furthermore, the local controller 100 may be connected to the remote maintenance server 1 to transmit and receive data, and change control settings for each device, and monitor its operation according to data received from the remote maintenance server 1.

Here, a unique account may be allocated to the remote maintenance server 1 for each point (or store) to issue an ID according to the account.

The local controller 100 may access the remote maintenance server 1 through an ID which is an account of the point, thereby receiving control data for the relevant point and control records.

Here, the control data may have a broad concept including the foregoing facility control schedule or facility maintenance schedule.

The facility control schedule may include information on a setting value according to the time of a control attribute or control parameter for the foregoing facilities.

Furthermore, as a schedule for maintaining or repairing the facilities, the facility maintenance schedule may include information on a maintenance and inspection schedule, past history, and the like of the facilities.

Furthermore, as a schedule for maintaining an amount of power consumption of the facilities, the facility maintenance schedule may include information on a setting value according to the time of a control attribute or control parameter for maintaining the amount of power consumption of the facilities under a predetermined value.

The local controller 100 may transmit information on an amount of power consumption (or energy consumption) for each control region collected and stored therein to the remote maintenance server 1, and receive its resultant rate information.

Furthermore, the local controller 100 may transmit its own facility control schedule or facility maintenance schedule to the remote maintenance server 1 according to the need or according to a request of the remote maintenance server 1.

The remote maintenance server 1 may divide each control region using an account allocated to each control region and transmit the requested data.

Furthermore, the local controller in each control region may access the remote maintenance server 1 using an account allocated to itself, and request data on each control region to the remote maintenance server 1.

Here, IDs with different authorities may be allocated to the remote maintenance server 1 and each control region, respectively, and data displayed according to the authority set to an ID during an access using the ID may be displayed in a limited manner.

During an access to the remote maintenance server 1 through an ID of the control region, control site or maintenance point, only data on the relevant maintenance point may be provided from the remote maintenance server 1.

The remote maintenance server 1 may control (or maintain) a plurality of control regions, control sites or maintenance points in an integrated manner or control (or maintain) in an individual manner according to the setting, and a predetermined maintenance point may be exceptionally processed during an integrated control (or maintenance).

Furthermore, the remote maintenance server 1 may provide data for a predetermined maintenance point according to an access account in connection with an access of the terminal 40 such as a portable terminal, a laptop computer, and the like.

Here, the data of a maintenance point corresponding to the access account may be transmitted regardless of the type of the accessed terminal.

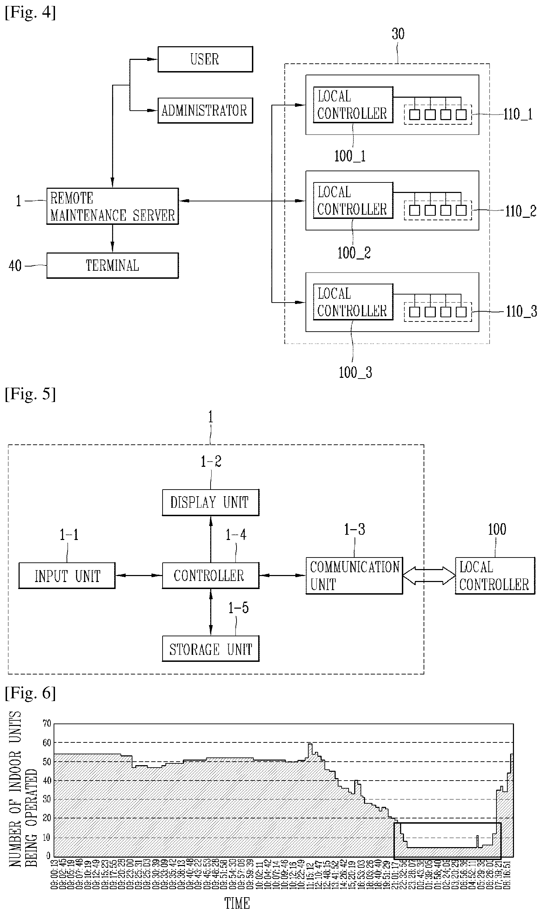

FIG. 4 is an exemplary view specifically illustrating a connection structure between a remote maintenance server and a plurality of local controllers in a remote total maintenance system (or remote maintenance system) according to an embodiment disclosed in the present disclosure.

Referring to FIG. 4, a remote total maintenance system according to an embodiment disclosed in the present disclosure may include a plurality of control regions, control sites or maintenance points 30 and a remote maintenance server 1 connected to the plurality of control regions 30 via a network.

Furthermore, the plurality of control regions 30, respectively, may include local controllers 100-1 to 100-3.

The local controllers 100-1 to 100-3 may perform the role of a gateway for converting various information or communication data according to a remote communication protocol to transmit or receive the converted information or data to or from the remote maintenance server 1. In other words, the local controllers 100-1 to 100-3 may perform the function of a router for transmitting and receiving signals corresponding to the various information or communication data.

In this case, the local controllers 100-1 to 100-3 may include a protocol conversion unit (not shown) configured to convert the various information or communication data according to a remote communication protocol.

According to a modified embodiment, a remote total maintenance system according to an embodiment disclosed in the present disclosure may include a gateway (not shown) configured to perform the role of a router.

In this case, the gateway may be disposed between te remote maintenance server 1 and the local controllers 100-1 to 100-3.

The remote maintenance server 1 may include a display unit (not shown) configured to display a device maintenance screen.

Here, the device maintenance screen may be a screen for displaying any one of air conditioning information, refrigeration information, power usage information, facility information, fault history information, fault setting information, and energy usage information.

The remote maintenance system may be connected to the remote maintenance server 1 via a network, and may further include a terminal 40 configured to receive and display the device maintenance data from the remote maintenance server 1.

The plurality of control regions 30 may include at least one facility or device 110-1 to 110-3 provided within the plurality of control regions 30.

Here, the facility or device 110-1 to 110-3 may include an air conditioner, a refrigerator, a freezer, a showcase, and the like, disposed within the plurality of control regions 30, and the remote maintenance server 1 may collect status data on the at least one facility or device 110-1 to 110-3.

The status data may include information on an indoor temperature when the each facility or device 110-1 to 110-3 is an air conditioner, and on an inside temperature when the each facility or device 110-1 to 110-3 is a refrigerator, a freezer or a showcase.

Furthermore, the status data may include humidity, a flow rate as well as a current temperature.

In addition, the facility or device 110-1 to 110-3 may include a facility within the control region such as a power meter or the like, and thus the status data may include information on an amount of power consumption of the each facility or device 110-1 to 110-3 and a total amount of power consumption (or energy consumption) thereof.

The plurality of control regions 30 may include a local controller 100-1 to 100-3 configured to receive the status data from the facility or device 110-1 to 110-3.

Furthermore, the local controller 100-1 to 100-3 may be also able to transmit data for remotely controlling or maintaining the facility or device 110-1 to 110-3 from the remote maintenance server 1 to the facility or device 110-1 to 110-3.

The remote maintenance server 1 may be connected to the facility or device 110-1 to 110-3 to generate fault history data when the status data continues to be greater than a preset threshold value.

Furthermore, the remote maintenance server 1 may display the fault history data for the user or administrator through a display device when the duration of the abnormal state passes a threshold time period.

Accordingly, the remote maintenance server 1 may notify the occurrence of abnormal state of a facility or device within the control region to the user or administrator, thereby allowing the user or administrator to effectively maintain a plurality of control regions.

Furthermore, the remote maintenance server 1 may also transmit the fault history data to an administrator server or a service center providing services associated with their maintenance or repair.

### Description of remote maintenance server according to an embodiment disclosed in the present disclosure

A remote maintenance server according to an embodiment disclosed herein may be implemented in part or a combination of the components or steps included in the foregoing embodiments or may be implemented in a combination of the foregoing embodiments. Hereinafter, overlapping portions may be omitted for clarity of the embodiment of a central maintenance server.

Accordingly, the description of a remote maintenance server overlapped with the content of the foregoing remote maintenance system will be omitted.

In particular, a remote maintenance server according to an embodiment disclosed in the present disclosure may be a maintenance server for remotely maintaining at least one maintenance point provided with an air conditioner having a plurality of indoor units performing air conditioning and at least one outdoor unit connected to the indoor units to drive the indoor units.

As a remote maintenance server for remotely maintaining at least one maintenance point provided with an air conditioner having a plurality of indoor units performing air conditioning and at least one outdoor unit connected to the indoor units to drive the indoor units, the remote maintenance server according to an embodiment disclosed in the present disclosure may include a communication unit configured to perform communication with the at least one maintenance point, and a controller configured to control the communication unit to detect a first indoor unit being continuously operated during a specific time period or a second indoor unit being operated during a non-operating time period corresponding to at least one maintenance point among the plurality of indoor units when a waste operation mode is activated, and transmit a control command to the local controller of the at least one maintenance point for controlling the operation of the detected first indoor unit or second indoor unit.

In other words, the controller may detect at least one of the first indoor unit and the second indoor unit, and generate a control command for controlling the operation of at least one of the detected first indoor unit and second indoor unit.

According to an embodiment, the at least one maintenance point may be a region corresponding to at least one of a structure, a building, a store, a mall and a school, which are maintained, repaired and managed by the remote maintenance server.

Furthermore, according to an embodiment, the controller may stop the operation of the first indoor unit and the second indoor unit through the control command or control at least one of an operation rate, a set temperature for the plurality of indoor units and a compression capacity of a compressor contained in the air conditioner according to a control setting value.

Furthermore, according to an embodiment, the operation rate may be a ratio between a number of the plurality of indoor units and a number of operated indoor units among the plurality of indoor units.

Furthermore, according to an embodiment, the controller may adjust an operation frequency of the compressor to control the compression capacity.

Furthermore, according to an embodiment, the specific time period may be 10 hours.

Furthermore, according to an embodiment, the remote maintenance server may further include a display unit configured to display a maintenance screen for maintaining the at least one maintenance point.

Furthermore, according to an embodiment, the display unit may display control information, which is information associated with at least one of a control state and a control result in which at least one of whether or not the operation of the first indoor unit or the second indoor unit is stopped, the control setting value, the operation rate, the set temperature and the compression capacity is controlled, in a first region on the maintenance screen.

Furthermore, according to an embodiment, the display unit may display a control setting UI, which is a graphic user interface (GUI) for receiving a user input activating the waste operation mode, the specific time period, the non-operating time period and the control setting value, in a second region on the maintenance screen.

Furthermore, according to an embodiment, the display unit may display a plurality of indoor unit indicators indicating the plurality of indoor units, respectively, in a third region on the maintenance screen, and the controller may display a waste indicator indicating that power is wasted within an indoor unit indicator indicating the first indoor unit or the second indoor unit among the plurality of indoor unit indicators when the first indoor unit or the second indoor unit is detected.

Furthermore, according to an embodiment, the communication unit may perform communication with a local controller provided at the at least one maintenance point, respectively, to control the air conditioner, and the controller may control the air conditioner through the local controller.

Furthermore, according to an embodiment, the communication unit may perform communication with the local controller in a first communication mode, and the local controller may perform communication with the air conditioner in a second communication mode.

Furthermore, according to an embodiment, the first communication mode may be at least one of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax), and the second communication mode may be RS-485.

In the aspect of a remote total maintenance system, technologies disclosed in the present disclosure may be a remote total maintenance system including at least one maintenance point provided with an air conditioner having a plurality of indoor units performing air conditioning and at least one outdoor unit connected to the indoor units to drive the indoor units, and a remote maintenance server configured to remotely maintain the at least one maintenance point, wherein the remote maintenance server corresponds to a remote maintenance server according to the foregoing embodiments.

FIG. 5 is a configuration diagram illustrating the configuration of a remote maintenance server according to an embodiment disclosed in the present disclosure.

Referring to FIG. 5, the remote maintenance server 1 according to an embodiment disclosed in the present disclosure may include a compression unit 1-3 and a controller 1-4.

Furthermore, according to an embodiment, the remote maintenance server 1 may further include an input unit 1-1, a display unit 1-2, and a storage unit 1-5.

In addition, the remote maintenance server 1 may further include various constituent elements for a remote maintenance function according to an embodiment disclosed in the present disclosure.

The constituent elements illustrated in FIG. 5 are not necessarily required, and the remote maintenance server 1 may be implemented with greater or less number of elements than those illustrated elements.

Hereinafter, the constituent elements will be described in sequence.

However, overlapping portions with the content associated with the remote maintenance server 1 disclosed in FIGS. 1 through 4 may be omitted.

First, the remote maintenance server 1 may perform a function of remotely maintaining at least one maintenance point provided with an air conditioner having a plurality of indoor units performing air conditioning and at least one outdoor unit connected to the indoor units to drive the indoor units.

The communication unit 1-3 may perform the role of performing communication with at least one maintenance point 30 provided with a facility consuming energy.

Each of the at least one maintenance point 30 may include a local controller (or local maintenance unit) 100 for controlling or maintaining the facility.

In this case, the communication unit 1-3 may perform communication with the local controller 100 contained in the at least one maintenance point 30, respectively.

In other words, the communication unit 1-3 may be provided at the at least one maintenance point 30, respectively, to perform communication with the local controller 100 for controlling at least one facility provided at the at least one maintenance point 30, respectively.

Here, each of the at least one maintenance point 30 may be a region corresponding to at least one of a structure, a building, a store, a mall and a school, which are maintained, repaired and managed by the remote maintenance server.

The at least one maintenance point 30 may be referred to as a control site, a maintenance site, a control region, or the like.

According to an embodiment, the communication unit 1-3 may transmit a control command generated by the controller 1-4 to the at least one maintenance point.

According to an embodiment, the control command may be a command for controlling the operation of a first indoor unit or second indoor unit detected by the controller 1-4 which will be described later.

The communication unit 1-3 may be provided at the maintenance point 30, respectively, to perform communication with the local controller 100 for controlling the air conditioner, and the controller 1-4 may control the air conditioner through the local controller.

As described above, the local controller 100 may perform the role of a gateway, the communication unit 1-3 may perform communication with the local controller 100 through an additional gateway connecting between the remote maintenance server 1 and the local controller 100.

The communication unit 1-3 may perform communication with the local controller 100 in a first communication mode.

Furthermore, the local controller 100 may perform communication with the at least one facility in a second communication mode.

Here, the first communication mode may be at least one of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax).

Furthermore, the second communication mode may be RS-485.

According to an embodiment, the communication unit 1-3 may receive a demand response (DR) control request for the at least one maintenance point 30 from a power maintenance system (not shown).

In this case, the controller 1-4 may generate the control command when the DR control request is received.

The power maintenance system may be a system operated by a power company. For example, the power company may be Korea Electric Power Corporation, in case of a domestic company.

Considering the DR (demand response or demand maintenance) in brief, the DR may be a system derived by the need of an effective energy policy establishment in an energy consuming society.

The DR which is a demand maintenance may reasonably adjust power demand, thereby having an advantage of promoting cost reduction and stable power supply through the enhancement of a load factor as well as contributing to national energy savings.

According to an embodiment, the demand maintenance may include midnight electricity utilization, maximum demand power control, direct load control, remotely-controlled air conditioning and time-based pricing, and the like.

The demand response or demand maintenance refers to allowing an end customer to use power away from daily consumption patterns in response to a price or monetary compensation or instruction of the power company.

In general, power companies may provide monetary compensation to allow an end customer to reduce power consumption in order to cope with situations such as an increase in wholesale market prices or threatening system reliability.

According to an embodiment, the demand response or demand maintenance may include time-based pricing for inducing end customers to voluntarily reduce electricity consumption due to economic incentives such as electricity cost savings through a method of paying expensive rates during a time zone in which a reduction in electricity use is required since the power demand reaches its peak as well as paying inexpensive rates during the rest of the time zone.

Furthermore, the demand response or demand maintenance may include incentive payment for allowing a system administrator who should maintain a balance between real-time supply and demand to directly provide a predetermined incentive, thereby inducing end customers who reduce electricity consumption during a time zone in which a reduction in electricity use is required since the power demand reaches its peak to reduce electricity consumption.

Accordingly, the DR control request may denote a power consumption control or maintenance request to the at least one maintenance point 30 based on the time-based pricing or incentive payment.

According to another embodiment, the communication unit 1-3 may perform communication with a data center server (not shown) for collecting information on the amount of energy consumption from the at least one maintenance point 30 to acquire information on the amount of energy consumption.

Here, the data center server may be a constituent element corresponding to a power maintenance server included in the foregoing power maintenance system.

Accordingly, the communication unit 1-3 may directly acquire power consumption information from the at least one maintenance point 30, respectively, but also indirectly acquire the power consumption information from the power maintenance system for collecting power consumption information from the at least one maintenance point 30, respectively.

According to an embodiment, specifically, the remote maintenance server 1 may determine whether a reduction in the amount of power consumption is required based on the power consumption information acquired from the controller 1-4 and the communication unit 1-3, and generate the control command when a reduction in the amount of power consumption is required.

According to another embodiment, the power maintenance system may generate the DR control request based on the power consumption information collected by the power maintenance system itself, and the remote maintenance server 1 may generate the control command when the 104 and the communication unit 1-3 has received the DR control request.

The controller 1-4 may perform the role of controlling constituent elements included in the remote maintenance server 1 to provide a remote maintenance function according to an embodiment disclosed in the present disclosure.

According to an embodiment, controller 1-4 may control the communication unit 1-3 to detect a first wasteful type of indoor unit that is continuously operating during a specific time period among the plurality of indoor units when a waste operation mode is activated in the controller, and transmit a control command for controlling the operation of the detected first wasteful type of indoor unit. In addition or in the alternative, the controller 1-4 may control the communication unit 1-3 to detect a second wasteful type of indoor unit, which can be the same indoor unit as in the first wasteful type, that is operating during a non-operating time period among the plurality of indoor units when a waste operation mode is activated in the controller, and transmit a control command for controlling the operation of the detected second wasteful type of indoor unit to the at least one maintenance point.

FIG. 6 is an exemplary view illustrating a method of detecting an indoor unit being operated in a wasteful manner during a non-operating time period according to an embodiment disclosed in the present disclosure.

Referring to FIG. 6, the controller 1-4 may detect wasteful operation by monitoring indoor units being operated in the non-operating time period.

The non-operating time period may denote non-working hours for employees working at the at least one maintenance point.

For example, the non-operating time period or the non-working hours may be 23:00 ∼ 05:00.

As illustrated in FIG. 6, the controller 1-4 may detect five indoor units being operated during the non-operating time period, which is the second type of wasteful operation.

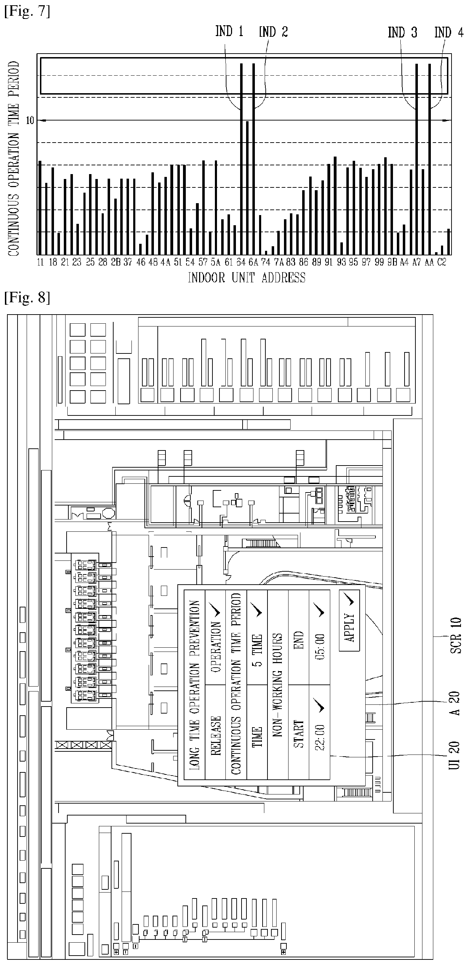

FIG. 7 is an exemplary view illustrating a method of detecting an indoor unit being continuously operated during a specific time period to show a waste operation state according to an embodiment disclosed in the present disclosure.

Referring to FIG. 7, the specific time period may be 10 hours.

As illustrated in FIG. 7, the controller 1-4 may detect four indoor units (IND 4 ∼ IND 4) being continuously operated for more than 10 hours, which is the first type of wasteful operation.

According to an embodiment, the controller1-4 may stop the operation of the first or second wasteful types of indoor unit through a control command to control at least one of an operation rate, a set temperature for the plurality of indoor units and a compression capacity of a compressor contained in the air conditioner according to a control setting value.

Here, the control setting value may be a setting value associated with an operation rate of the plurality of indoor units (for example, 70%), a compression capacity for the compressor (for example, 80%), and a set temperature (for example, 25 degrees).

The operation rate may be a ratio between a number of the plurality of indoor units and a number of operated indoor units among the plurality of indoor units.

For example, when the number of the plurality of indoor units is 100, and the number of indoor units being operated is 50, the operation rate may be 0.5.

The controller 1-4 may adjust an operation frequency of the compressor to control the compression capacity.

The display unit 1-2 may display information processed in the remote maintenance server 1.

For example, the display unit 1-2 may display a user interface (UI) or graphic user interface (GUI) associated with a function provided by the remote maintenance server 1.

According to an embodiment, the display unit 1-2 may display a maintenance screen (SCR10) for maintaining the at least one maintenance point (refer to FIGS. 8 through 10).

Furthermore, according to an embodiment, the display unit 1-2 may display control information, which is information associated with at least one of a control state and a control result in which at least one of whether or not the operation of the first or second type of indoor unit is stopped, the control setting value, the operation rate, the set temperature and the compression capacity is controlled, in a first region on the maintenance screen.

Furthermore, according to an embodiment, the display unit 1-2 may display a control setting UI, which is a graphic user interface (GUI) for receiving a user input activating the waste operation mode, the specific time period, the non-operating time period and the control setting value, in a second region on the maintenance screen.

Furthermore, according to an embodiment, the display unit 1-2 may display a plurality of indoor unit indicators indicating the plurality of indoor units, respectively, in a third region on the maintenance screen.

In this case, the controller 1-4 may display a waste indicator indicating that power is wasted within an indoor unit indicator indicating the first indoor unit or the second indoor unit among the plurality of indoor unit indicators when the first indoor unit or the second indoor unit is detected.

The display unit 1-2 may include at least one of a Liquid Crystal Display (LCD), a Thin Film Transistor-Liquid Crystal Display (TFT-LCD), an Organic Light-Emitting Diode (OLED), a flexible display, a three-dimensional (3D) display, or the like.

Furthermore, there may exist two or more display units according to an implementation form of the remote maintenance server 1. For example, an external display unit (not shown) and an internal display unit (not shown) may concurrently exist on the remote maintenance server 1.

When the display unit 1-2 and a touch sensitive sensor (hereinafter, referred to as a "touch sensor") have an interlayer structure (hereinafter, referred to as a "touch screen"), the display unit 1-2 may be used as an input device in addition to an output device. The touch sensor may be implemented as a touch film, a touch sheet, a touch pad, and the like.

FIGS. 8 through 10 are exemplary views illustrating a maintenance screen of a remote maintenance server according to an embodiment disclosed in the present disclosure.

Referring to FIGS. 8 through 10, the display unit 1-2 may display a maintenance screen (SCR10) for maintaining the at least one maintenance point.

According to an embodiment, the display unit 1-2 may display control information, which is information associated with at least one of a control state and a control result in which at least one of whether or not the operation of the first indoor unit or the second indoor unit (an indoor unit being wasted among indoor units installed at control sites (AAA ∼ AAC)) is stopped, the control setting value, the operation rate, the set temperature and the compression capacity is controlled, in a first region (A10) on the maintenance screen (SCR10).

The first region (A1) displayed with the control information may be a user interface (UI) or graphic user interface (GUI).

In other words, the controller 1-4 may display a monitoring UI (UI10) for monitoring the control information in the first region (A10).

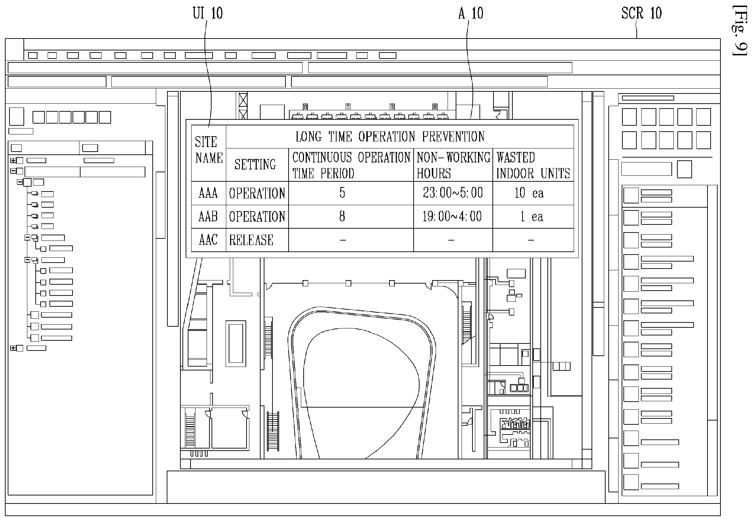

Accordingly, the user or administrator of the remote maintenance server 1 may check control information, which is information associated with at least one of a control state and a control result in which at least one of whether or not the operation of the first indoor unit or the second indoor unit is stopped (for example number of wasted indoor units of control site AAA: 10 ea, in case of FIG. 9), the control setting value (for example, continuous operation time period of control site AAA: 5, in case of FIG. 9), the operation rate, the set temperature and the compression capacity is controlled, through the monitoring UI (UI10).

Furthermore, according to an embodiment, the display unit 1-2 may display a control setting UI (UI20), which is a graphic user interface (GUI) for receiving a user input activating the waste operation mode (for example, "operation" below "long time operation prevention", in case of FIG. 8), the specific time period (for example, "5 hours" below "continuous operation time period", in case of FIG. 8), the non-operating time period (for example, "start" or "end" below "non-working hours", in case of FIG. 8) and the control setting value, in a second region (A20) on the maintenance screen (SCR10) (refer to FIG. 8).

The control setting value may be a setting value associated with the specific time period (for example, 5 hours), the non-working hours (for example, start: 22:00, end: 05:00), an operation rate of the plurality of indoor units (for example, 70%), and a compression capacity for the compressor (for example, 80%).

The user or administrator of the remote maintenance server 1 may enter the specific time period ("continuous operation time period" in FIG. 8), the non-operating time period ("non-working hours" in FIG. 8), and the control setting value (a concept including the specific time period and the non-operating time period as well as the operation rate, compression capacity, and set temperature).

Furthermore, the user or administrator of the remote maintenance server 1 may perform an energy reduction function by selecting (clicking or touching) icon "apply" provided by the control setting UI (UI20).

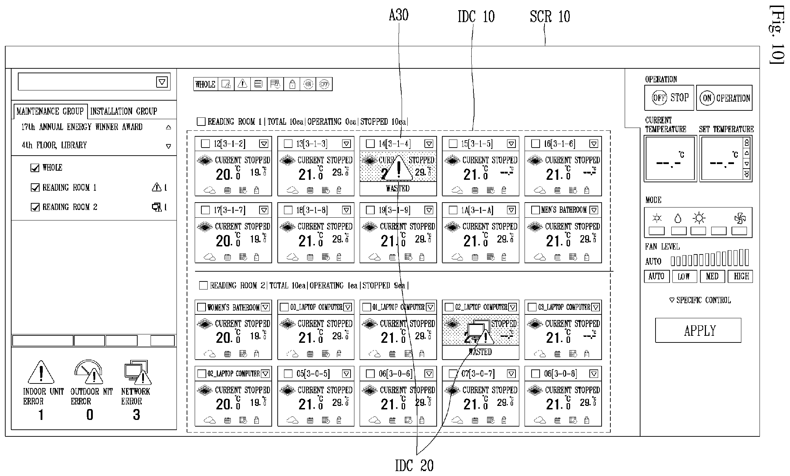

Referring to FIG. 10, the display unit 1-2 may display a plurality of indoor unit indicators (IDC10) indicating the plurality of indoor units, respectively, in a third region (A30) on the maintenance screen (SCR10).

When the first indoor unit or the second indoor unit is detected, the controller 1-4 may display a waste indicator (IDC20) indicating that power is wasted within an indoor unit indicator (IDC10, IDC20) indicating the first indoor unit or the second indoor unit among the plurality of indoor unit indicators.

Referring to FIG. 5 again, the input unit 1-1 may perform the role of receiving a user input for controlling the remote maintenance server 1.

The input unit 1-1 may allow the user to generate input data for the operation control of the remote maintenance server 1.

The input unit 1-1 may be configured with a keypad, a dome switch, a touch pad (resistive/capacitive), a jog wheel, a jog switch, and the like. In particular, when the touch pad and the display unit 1-2 have an interlayer structure, it may be referred to as a touch screen.

According to an embodiment, the input unit 1-1 may receive the foregoing various user inputs from the user.

For example, the input unit 1-1 may receive a control command associated with facility control on a control screen displayed by the display unit 1-2.

The storage unit 1-5 may perform the role of storing information received, processed and generated by the remote maintenance server 1.

For example, the storage unit 1-5 may store a program for the processing and control of the controller 1-4, and perform a function of temporarily storing input/output data (for example, a user input through a user interface, a control processing step or control result, and the like).

Furthermore, the storage unit 1-5 may store the user interface screen (or the control screen).

The storage unit 1-5 may include at least one type of storage medium among a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like.

Furthermore, the remote maintenance server 1 may operate a web storage which performs the storage function of the storage unit 1-5 on the Internet.

### Description of remote maintenance method according to an embodiment disclosed in the present disclosure

As a remote maintenance method by a remote maintenance server for remotely maintaining at least one maintenance point provided with an air conditioner having a plurality of indoor units performing air conditioning and at least one outdoor unit connected to the indoor units to drive the indoor units, the remote maintenance method may include detecting a first indoor unit being continuously operated during a specific time period or a second indoor unit being operated during a non-operating time period corresponding to at least one maintenance point among the plurality of indoor units when a waste operation mode is activated, and transmitting a control command for controlling the operation of the detected first indoor unit or second indoor unit to the at least one maintenance point.

According to an embodiment, the at least one maintenance point may be a region corresponding to at least one of a structure, a building, a store, a mall and a school, which are maintained, repaired and managed by the remote maintenance server.

Furthermore, according to an embodiment, the at least one maintenance point may stop the operation of the first indoor unit and the second indoor unit through the control command or control at least one of an operation rate, a set temperature for the plurality of indoor units and a compression capacity of a compressor contained in the air conditioner according to a control setting value.

Furthermore, according to an embodiment, the operation rate may be a ratio between a number of the plurality of indoor units and a number of operated indoor units among the plurality of indoor units.

Furthermore, according to an embodiment, the compression capacity may adjust an operation frequency of the compressor.

Furthermore, according to an embodiment, the specific time period may be 10 hours.

Furthermore, the remote maintenance method according to an embodiment may further include displaying a maintenance screen for maintaining the at least one maintenance point.

Furthermore, the remote maintenance method according to an embodiment may further include displaying control information, which is information associated with at least one of a control state and a control result in which at least one of whether or not the operation of the first indoor unit or the second indoor unit is stopped, the control setting value, the operation rate, the set temperature and the compression capacity is controlled, in a first region on the maintenance screen.

Furthermore, the remote maintenance method according to an embodiment may further include displaying a control setting UI, which is a graphic user interface (GUI) for receiving a user input activating the waste operation mode, the specific time period, the non-operating time period and the control setting value, in a second region on the maintenance screen.

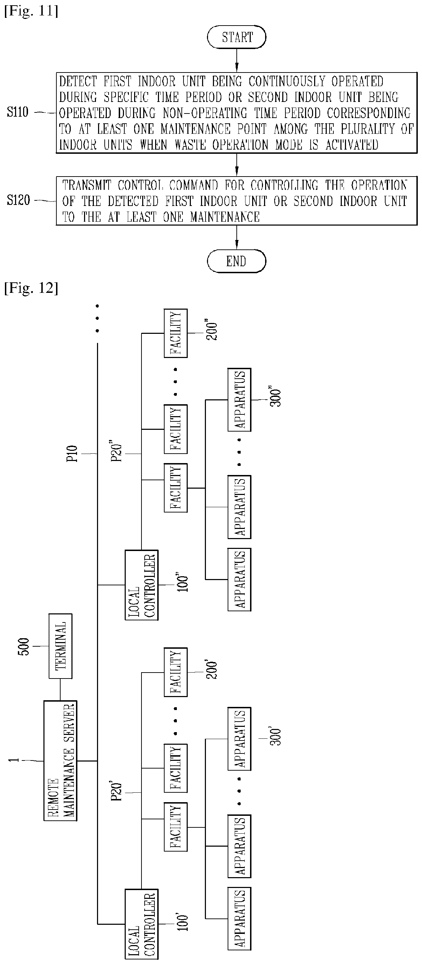

FIG. 11 is a flow chart illustrating a remote maintenance method according to an embodiment disclosed in the present disclosure.

Referring to FIG. 11, a remote maintenance method according to an embodiment disclosed in the present disclosure may be carried out with the following steps.

First, when a waste operation mode is activated, the remote maintenance server may detect a first indoor unit being continuously operated during a specific time period or a second indoor unit being operated during a non-operating time period corresponding to at least one maintenance point among the plurality of indoor units (S110).

Next, the remote maintenance server may transmit a control command for controlling the operation of the detected first indoor unit or second indoor unit to the at least one maintenance point (S120).

### Remote maintenance function through terminal connected to remote maintenance server

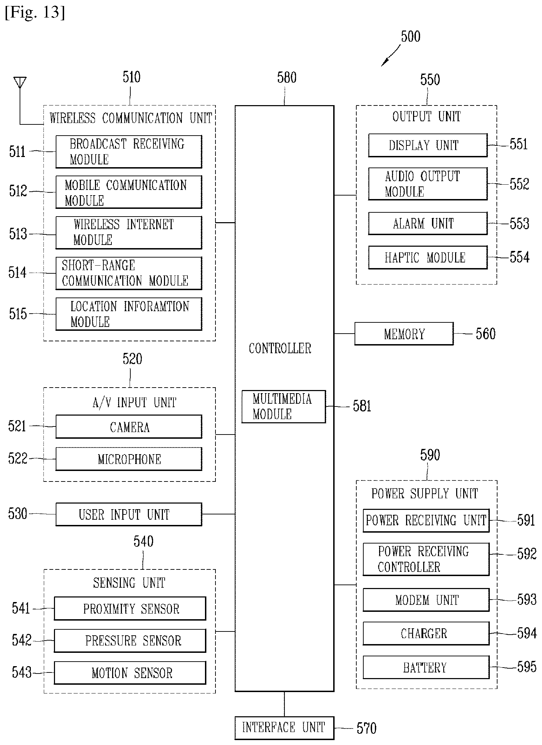

Hereinafter, a remote maintenance function through an external terminal connected to a remote maintenance server according to an embodiment will be described in detail with reference to FIGS. 12 and 13.

A remote maintenance function according to an embodiment disclosed herein may be implemented in part or a combination of the components or steps included in the foregoing embodiments or may be implemented in a combination of the foregoing embodiments, and hereinafter, overlapping portions may be omitted for clarity of the embodiment of a remote maintenance function through a terminal according to an embodiment.

FIG. 12 is an exemplary view illustrating an external terminal connected to a remote maintenance server according to an embodiment disclosed in the present disclosure.

Referring to FIG. 12, the remote maintenance server 1 according to an embodiment disclosed in the present disclosure may be connected to a terminal (or external terminal 500) in a wired or wireless manner.

For the purpose of this, the remote maintenance server 1 may be connected to the terminal 500 through the foregoing communication unit 1-3.

The user or administrator of a remote total maintenance system (TMS) may control the remote maintenance server 1 through the terminal 500.

Accordingly, the user or administrator of the remote total maintenance system (TMS) may execute all remote maintenance functions according to the foregoing embodiments through the terminal 500.

FIG. 13 illustrates a configuration diagram illustrating the configuration of a terminal connected to a remote maintenance server disclosed in the present disclosure.

FIG. 13 illustrates a configuration in which the terminal 500 is implemented in a mobile terminal form according to the embodiments disclosed in the present disclosure.

Furthermore, the terminal 500 may include a wireless communication unit 110, an audio/video (A/V) input unit 520, a user input unit 530, a sensing unit 540, an output unit 550, a memory 560, an interface unit 570, a controller 580, a power supply unit 590, and the like. However, the constituent elements as illustrated in FIG. 9 are not necessarily required, and the mobile device may be implemented with greater or less number of elements than those illustrated elements.

Hereinafter, the constituent elements will be described in sequence.

The wireless communication unit 510 may typically include one or more elements allowing radio communication between the terminal 500 and a wireless communication system, between radio communication the terminal 500 and a network in which the terminal 500 is located, or between the terminal 500 and the central control device 100.

For example, the wireless communication unit 510 may include a broadcast receiving module 511, a mobile communication module 512, a wireless Internet module 513, a short-range communication module 514, a location information module 515, and the like.

The broadcast receiving module 511 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the terminal 500. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 512.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 511 may receive a broadcast signal using various types of broadcast systems. In particular, the broadcast receiving module 511 may receive a digital broadcast signal using a digital broadcast system such as digital multimedia broadcasting-terrestrial (DMB-T), digital multimedia broadcasting-satellite (DMB-S), media forward link only (MediaFLO), digital video broadcast-handheld (DVB-H), integrated services digital broadcast-terrestrial (ISDB-T), and the like. The broadcast receiving module 511 is, of course, configured to be suitable for every broadcast system that provides a broadcast signal as well as the above-mentioned digital broadcast systems.

The broadcast signal and/or broadcast-associated information received through the broadcast receiving module 511 may be stored in the memory 560.

The mobile communication module 512 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The wireless Internet module 513 means a module for supporting wireless Internet access. The wireless Internet module 513 may be built-in or externally installed to the terminal 500. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 514 is a module for supporting a short-range communication. Here, it may be used a wireless short-range communication technology including Bluetooth, Radio Frequency IDentification (RFID), Infrared Data Association (IrDA), Ultra WideBand (UWB), ZigBee, and the like. Meanwhile, it may be used a wired short-range communication technology including Universal Serial Bus (USB), IEEE 1394, Thunderbolt TM, and the like.

The wireless Internet module 513 or the short-range communication module 514 may establish data communication connection to the central control device 100.

Through the established data communication, when there is an audio signal to be output while transmitting power in a wireless manner, the wireless Internet module 513 or the short-range communication module 514 may transmit the audio signal to the central control device 100 through the short-range communication module. Furthermore, through the established data communication, when there is information to be displayed, the wireless Internet module 513 or the short-range communication module 514 may transmit the information to the central control device 100. Otherwise, through the established data communication, the wireless Internet module 513 or the short-range communication module 514 may receive an audio signal entered through a microphone embedded in the central control device 100. Furthermore, the wireless Internet module 513 or the short-range communication module 514 may transmit the identification information (for instance, phone number or device name in case of a portable phone) of the mobile terminal 500 to the central control device 100 through the established data communication.

The location information module 515 is a module for acquiring a location of the mobile device, and there is a global positioning system (GPS) module as an example.

Referring to FIG. 9, the A/V(audio/video) input unit 520 receives an audio or video signal, and the A/V (audio/video) input unit 520 may include a camera 521 and a microphone 522. The camera 521 processes a image frame, such as still picture or video, obtained by an image sensor in a video phone call or image capturing mode. The processed image frame may be displayed on a display unit 551.

The image frames processed by the camera 521 may be stored in the memory 560 or transmitted to an external device through the wireless communication unit 510. Two or more cameras 521 may be provided according to the use environment of the mobile device.

The microphone 522 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 512 in the phone call mode. The microphone 522 may implement various types of noise canceling algorithms to cancel noise generated in a procedure of receiving the external audio signal.

The user input unit 530 may generate input data to control an operation of the terminal. The user input unit 530 may be configured by including a keypad, a dome switch, a touch pad (pressure/capacitance), a jog wheel, a jog switch, and the like.

The sensing unit 540 may include a proximity sensor 541, a pressure sensor 542, a motion sensor 543, and the like. The proximity sensor 541 detects an object approaching the mobile terminal 500, or the presence or absence of an object existing adjacent to the mobile terminal 500, and the like without any mechanical contact. The proximity sensor 541 may detect a proximity object using a change of the AC magnetic field or static magnetic field, a change rate of the electrostatic capacity, or the like. Two or more proximity sensors 541 may be provided according to the aspect of configuration.

The pressure sensor 542 may detect whether or not a pressure is applied to the mobile terminal 500, a size of the pressure, and the like. The pressure sensor 542 may be provided at a portion where the detection of a pressure is required in the mobile terminal 500 according to the use environment. When the pressure sensor 542 is provided in the display unit 551, it may be possible to identify a touch input through the display unit 551 and a pressure touch input by which a pressure larger than the touch input is applied according to a signal outputted from the pressure sensor 542. Furthermore, it may be possible to know a size of the pressure applied to the display unit 551 during the input of a pressure touch.

The motion sensor 543 detects the location or movement of the mobile terminal 500 using an acceleration sensor, a gyro sensor, and the like. The acceleration sensor that can be used in the motion sensor 543 is an element for converting an acceleration change in any one direction into an electrical signal. The acceleration sensor is typically configured by providing two or three axes in a package, and according to the used circumstances there may be a case where only one z-axis is required. Accordingly, when the x-axis or y-axis acceleration sensor is used instead of the z-axis acceleration sensor due to any reason, the acceleration sensor may be provided to be placed upright on a main substrate using a separate piece of substrate. The gyro sensor as a sensor for measuring an angular velocity of the mobile terminal 500 performing a rotational movement may sense a rotated angle with respect to each reference direction. For instance, the gyro sensor may sense each rotated angle with reference to three directional axes, namely, azimuth, pitch and roll.

The output unit 550 is configured to generate an output for visual, auditory or tactile sense, and the output unit 550 may include the display unit 551, an audio output module 552, an alarm unit 553, a haptic module 554, and the like.

The display unit 551 may display (output) information processed in the terminal 500. For example, when the terminal 500 is in a phone call mode, the display unit 551 may display a User Interface (UI) or a Graphic User Interface (GUI) associated with a call. When the terminal 500 is in a video call mode or image capturing mode, the display unit 551 may display a captured image and/or received image, a UI or GUI.

The display unit 551 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a mobile device body through a region occupied by the display unit 551 of the mobile device body.

Two or more display units 551 may be implemented according to a configured aspect of the terminal 500. For instance, a plurality of the display units 551 may be arranged on one surface to be spaced apart from or integrated with each other, or may be arranged on different surfaces.

When the display unit 551 and a touch sensitive sensor (hereinafter, referred to as a "touch sensor") have an interlayer structure (hereinafter, referred to as a "touch screen"), the display unit 551 may be used as an input device rather than an output device. The touch sensor may be implemented as a touch film, a touch sheet, a touch pad, and the like.

The touch sensor may be configured to convert changes of a pressure applied to a specific part of the display unit 551, or a capacitance occurring from a specific part of the display unit 551, into electric input signals. Also, the touch sensor may be configured to sense not only a touched position and a touched area, but also a touch pressure.

When there is a touch input to the touch sensor, the corresponding signals are transmitted to a touch controller (not shown). The touch controller processes the received signals, and then transmits corresponding data to the controller 580. Accordingly, the controller 580 may sense which region of the display unit 551 has been touched.

A proximity sensor 541 may be arranged at an inner region of the terminal 500 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as 'proximity touch' whereas a status that the pointer substantially comes in contact with the touch screen will be referred to as 'contact touch' For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 552 may output audio data received from the wireless communication unit 510 or stored in the memory 560, in a call-receiving mode, a call-placing mode, a recording mode, a voice recognition mode, a broadcast reception mode, and so on. The audio output module 552 may output audio signals relating to functions performed in the terminal 500, e.g., sound alarming a call received or a message received, and so on. The audio output module 552 may include a receiver, a speaker, a buzzer, and so on.

The alarm 553 outputs signals notifying occurrence of events from the terminal 500. The events occurring from the terminal 500 may include call received, message received, key signal input, touch input, and so on. The alarm 553 may output not only video or audio signals, but also other types of signals such as signals notifying occurrence of events in a vibration manner. Since the video or audio signals can be output through the display unit 551 or the audio output unit 552, the display unit 551 and the audio output module 552 may be categorized into a part of the alarm 553.

The haptic module 554 generates various tactile effects which a user can feel. A representative example of the tactile effects generated by the haptic module 554 includes vibration. Vibration generated by the haptic module 554 may have a controllable intensity, a controllable pattern, and so on. For instance, different vibration may be output in a synthesized manner or in a sequential manner.

The haptic module 554 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 554 may be configured to transmit tactile effects through a user's direct contact, or a user's muscular sense using a finger or a hand. The haptic module 554 may be implemented in two or more in number according to the configuration of the terminal 500.

The memory 560 may store a program for processing and controlling the controller 580. Alternatively, the memory 560 may temporarily store input/output data (e.g., phonebook data, messages, audios, still images, videos, and the like). Also, the memory 560 may store data related to various patterns of vibrations and sounds outputted upon the touch input on the touch screen.

In some embodiments, software components including an operating system (not shown), a module performing a function of the wireless communication unit 510, a module operated along with the user input unit 530, a module operated along with the A/V input unit 520, and a module operated along with the output unit 550. The operating system (for example, LINUX, UNIX, OS X, WINDOWS, Chrome, Symbian, iOS, Android, VxWorks, or other embedded systems) may include various software components and/or drivers for controlling system tasks such as memory management, power management, and the like.

Furthermore, the memory 560 may store a program (for example, control program) associated with the control or maintenance of a facility. The program may be carried out by the controller 580.

Furthermore, the memory 560 may store an application associated with the control or maintenance of a facility downloaded from an application providing server (for example, app store).

The memory 560 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the terminal 500 may operate a web storage which performs the storage function of the memory 560 on the Internet.

The interface unit 570 may generally be implemented to interface the mobile device with external devices. The interface unit 570 may allow a data reception from an external device, a power delivery to each component in the terminal 500, or a data transmission from the terminal 500 to an external device. The interface unit 570 may include, for example, wired/wireless headset ports, external charger ports, wired/ wireless data ports, memory card ports, ports for coupling devices having an identification module, audio Input/Output (I/O) ports, video I/O ports, earphone ports, and the like.

The identification module may be configured as a chip for storing various information required to authenticate an authority to use the terminal 500, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the terminal 500 via a port.

The interface unit may serve as a path for power to be supplied from an external cradle to the terminal 500 when the terminal 500 is connected to the external cradle or as a path for transferring various command signals inputted from the cradle by a user to the terminal 500. Such various command signals or power inputted from the cradle may operate as signals for recognizing that the mobile device has accurately been mounted to the cradle.

The controller 580 typically controls the overall operations of the terminal 500. For example, the controller 580 performs the control and processing associated with telephony calls, data communications, video calls, and the like. Furthermore, the controller 580 may include a multimedia module 581 which provides multimedia playback. The multimedia module 581 may be configured as part of the controller 580 or as a separate component.

The controller 580 can perform a pattern recognition processing so as to recognize writing or drawing input on the touch screen as text or image.

The power supply unit 590 receives external power and internal power under the control of the controller 580 to supply power required by various components.

The power supply unit 590 may be provided with a battery 599 configured to supply power to various elements of the terminal 500, and may include a charger 598 for charging the battery 599 in a wired or wireless manner.

Though the present disclosure discloses a mobile terminal connected to the central control device 100 as an example, it may be easily understood by those skilled in the art that the configuration according to the exemplary embodiments of this specification can also be applied to a stationary terminal such as a digital TV, a desktop computer and the like, excluding a case of being applicable only to the mobile terminal.

Briefly summarizing the foregoing technologies disclosed in the present disclosure, the technologies disclosed in the present disclosure relates to a remote total maintenance system, a remote maintenance server and a remote maintenance method for determining non-working hours and stopping the operation of indoor units being operated to prevent energy from being wasted due to the existence of indoor units being operated even during early morning or non-working hours when leaving office without turning off the indoor units being operated or leaving office while forgetting them though the maintenance point or control site is out of working hours, thereby performing a power saving function.

Furthermore, the technologies disclosed in the present disclosure relates to a remote total maintenance system, a remote maintenance server and a remote maintenance method for detecting indoor units being continuously operated and stopping the continuously operated indoor units based on a user's set limit value to perform a power saving function when there exist indoor units being excessively operated in a continuous manner compared to the other indoor units.

A remote total maintenance system, a remote maintenance server and a remote maintenance method according to an embodiment disclosed in the present disclosure may detect a first indoor unit being continuously operated during a specific time period or a second indoor unit being operated during a non-operating time period corresponding to at least one maintenance point among the plurality of indoor units when a waste operation mode is activated, and transmit a control command for controlling the operation of the detected first indoor unit or second indoor unit to the at least one maintenance point to efficiently maintain an amount of power consumption for the plurality of indoor units, thereby obtaining an advantage of reducing power consumed by a control site.

The scope of the present invention may not be limited to those specific embodiments, and various modifications, variations, and improvements can be made without departing from the scope of the appended claims.

## Claims

1. A remote maintenance server (1) for remotely maintaining at least one maintenance point (30) provided with an air conditioner (200) having a plurality of indoor units (154-1, 151-1, 151-2) performing air conditioning and at least one outdoor unit (154-2) connected to the indoor units to drive the indoor units,
the remote maintenance server (1) comprising:
a communication unit (1-3) configured to perform communication with the at least one maintenance point (30); and
a controller (1-4) configured to control the communication unit (1-3) to detect a first indoor unit being continuously operated during a specific time period or a second indoor unit being operated during a non-operating time period corresponding to at least one maintenance point (30) among the plurality of indoor units when a waste operation mode is activated, and transmit a control command for controlling the operation of the detected first indoor unit or second indoor unit to the at least one maintenance point (30),
wherein the controller (1-4) stops the operation of the first indoor unit and the second indoor unit through the control command or controls at least one of an operation rate, a set temperature for the plurality of indoor units (154-1, 151-1, 151-2) and a compression capacity of a compressor contained in the air conditioner according to a control setting value.

2. The remote maintenance server (1) of claim 1, wherein the at least one maintenance point (30) is a region corresponding to at least one of a structure, a building, a store, a mall and a school, which are maintained, repaired and managed by the remote maintenance server (1).

3. The remote maintenance server (1) of claim 1 or 2, wherein the operation rate is a ratio between a number of the plurality of indoor units (154-1, 151-1, 151-2) and a number of operated indoor units among the plurality of indoor units (154-1, 151-1, 151-2).

4. The remote maintenance server (1) of any of claims 1 to 3 wherein the controller (1-4) adjusts an operation frequency of the compressor to control the compression capacity.

5. The remote maintenance server (1) of any of claims 1 to 4, further comprising:
a display unit (1-2) configured to display a maintenance screen (SCR10) for maintaining the at least one maintenance point (30).

6. The remote maintenance server (1) of claim 5, wherein the display unit (1-2) displays control information, which is information associated with at least one of a control state and a control result in which at least one of whether or not the operation of the first indoor unit or the second indoor unit is stopped, the control setting value, the operation rate, the set temperature and the compression capacity is controlled, in a first region on the maintenance screen (SCR10).

7. The remote maintenance server (1) of claim 5 or 6, wherein the display unit displays a control setting UI, which is a graphic user interface (GUI) for receiving a user input activating the waste operation mode, the specific time period, the non-operating time period and the control setting value, in a second region on the maintenance screen (SCR10).

8. The remote maintenance server (1) of any of claims 5 to 7, wherein the display unit (1-2) displays a plurality of indoor unit indicators indicating the plurality of indoor units (154-1, 151-1, 151-2), respectively, in a third region on the maintenance screen (SCR10), and
the controller (1-4) displays a waste indicator indicating that power is wasted within an indoor unit indicator indicating the first indoor unit or the second indoor unit among the plurality of indoor unit indicators when the first indoor unit or the second indoor unit is detected.

9. The remote maintenance server (1) of any of claims 1 to 8, wherein the communication unit (1-3) performs communication with a local controller (100) provided at the at least one maintenance point (30), respectively, to control the air conditioner (200), and
the controller (1-4) controls the air conditioner (200) through the local controller (100).

10. The remote maintenance server (1) of claim 9, wherein the communication unit (1-3) performs communication with the local controller (100) in a first communication mode, and
the local controller (100) performs communication with the air conditioner (200) in a second communication mode,
wherein the first communication mode is at least one of a mobile communication network, Transmission Control Protocol/Internet Protocol (TCP/IP), Local Area Network (LAN), Wireless LAN, Wi-Fi, Wireless Broadband (Wibro) and World Interoperability for Microwave Access (Wimax), and
the second communication mode is RS-485.

11. A remote total maintenance system (10), comprising:
at least one maintenance point (30) provided with an air conditioner (200) having a plurality of indoor units (154-1, 151-1, 151-2) performing air conditioning and at least one outdoor unit (154-2) connected to the indoor units to drive the indoor units; and
a remote maintenance server (1) configured to remotely maintain the at least one maintenance point (30),
wherein the remote maintenance server (1) is a remote maintenance server corresponding to any one of claims 1 through 10.

12. A remote maintenance method by a remote maintenance server for remotely maintaining at least one maintenance point provided with an air conditioner having a plurality of indoor units performing air conditioning and at least one outdoor unit connected to the indoor units to drive the indoor units,
the remote maintenance method comprising:
detecting (S110) a first indoor unit being continuously operated during a specific time period or a second indoor unit being operated during a non-operating time period corresponding to at least one maintenance point among the plurality of indoor units when a waste operation mode is activated; and
transmitting (S120) a control command for controlling the operation of the detected first indoor unit or second indoor unit to the at least one maintenance point,
wherein the at least one maintenance point stops the operation of the first indoor unit and the second indoor unit through the control command or controls at least one of an operation rate, a set temperature for the plurality of indoor units and a compression capacity of a compressor contained in the air conditioner according to a control setting value.

13. The remote maintenance method of claim 12, wherein the at least one maintenance point is a region corresponding to at least one of a structure, a building, a store, a mall and a school, which are maintained, repaired and managed by the remote maintenance server.

## Patentansprüche

1. Fernwartungsserver (1) zum Fernwarten von mindestens einem Wartungspunkt (30), der mit einer Klimaanlage (200) versehen ist, die eine Vielzahl von Inneneinheiten (154-1, 151-1, 151-2), die eine Klimatisierung durchführen, und mindestens eine Außeneinheit (154-2) aufweist, die mit den Inneneinheiten verbunden ist, um die Inneneinheiten zu betreiben,
wobei der Fernwartungsserver (1) aufweist:
eine Kommunikationseinheit (1-3), die konfiguriert ist, eine Kommunikation mit dem mindestens einen Wartungspunkt (30) durchzuführen; und
einen Kontroller (1-4), der konfiguriert ist, die Kommunikationseinheit (1-3) zu steuern, eine erste Inneneinheit, die während einer spezifischen Zeitspanne ununterbrochen betrieben wird, oder eine zweite Inneneinheit, die während einer betriebslosen Zeitspanne betrieben wird, die dem mindestens einem Wartungspunkt (30) entsprechen, unter der Vielzahl der Inneneinheiten zu ermitteln, wenn eine Verschwendungsbetriebsart aktiviert ist, und einen Steuerbefehl zum Steuern des Betriebs der ermittelten ersten Inneneinheit oder zweiten Inneneinheit an den mindestens einen Wartungspunkt (30) zu übertragen,
wobei der Kontroller (1-4) den Betrieb der ersten Inneneinheit und der zweiten Inneneinheit durch den Steuerbefehl stoppt oder eine Betriebsrate und/oder eine Solltemperatur für die Vielzahl der Inneneinheiten (154-1, 151-1, 151-2) und/oder eine Verdichtungskapazität eines in der Klimaanlage enthaltenen Verdichters gemäß einem Steuersollwert steuert.

2. Fernwartungsserver (1) nach Anspruch 1, wobei der mindestens eine Wartungspunkt (30) eine Region ist, die einem Bauwerk und/oder einem Gebäude und/oder einem Laden und/oder einem Einkaufszentrum und/oder einer Schule entspricht, die durch den Fernwartungsserver (1) gewartet, repariert und verwaltet werden.

3. Fernwartungsserver (1) nach Anspruch 1 oder 2, wobei die Betriebsrate ein Verhältnis zwischen einer Anzahl der Vielzahl der Inneneinheiten (154-1, 151-1, 151-2) und einer Anzahl der betriebenen Inneneinheiten unter der Vielzahl der Inneneinheiten (154-1, 151-1, 151-2) ist.

4. Fernwartungsserver (1) nach einem der Ansprüche 1 bis 3 wobei der Kontroller (1-4) eine Betriebsfrequenz des Verdichters einstellt, um die Verdichtungskapazität zu steuern.

5. Fernwartungsserver (1) nach einem der Ansprüche 1 bis 4, der ferner aufweist:
eine Anzeigeeinheit (1-2), die konfiguriert ist, einen Wartungsbildschirm (SCR10) zum Warten des mindestens eines Wartungspunkts (30) anzuzeigen.

6. Fernwartungsserver (1) nach Anspruch 5, wobei die Anzeigeeinheit (1-2) Steuerinformationen in einem ersten Bereich auf dem Wartungsbildschirm (SCR10) anzeigt, die Informationen sind, die mit einem Steuerungszustand und/oder einem Steuerungsergebnis verknüpft sind, in dem gesteuert wird, ob der Betrieb der ersten Inneneinheit oder der zweiten Inneneinheit gestoppt wird, und/oder der Steuersollwert und/oder die Betriebsrate und/oder die Solltemperatur und/oder die Verdichtungskapazität gesteuert werden.

7. Fernwartungsserver (1) nach Anspruch 5 oder 6, wobei die Anzeigeeinheit eine Steuereinstellung UI in einem zweiten Bereich auf dem Wartungsbildschirm (SCR10) anzeigt, die eine graphische Benutzerschnittstelle (GUI) zum Empfangen einer Benutzereingabe ist, die die Verschwendungsbetriebsart, die spezifische Zeitspanne, die betriebslosen Zeitspanne und den Steuersollwert aktiviert.

8. Fernwartungsserver (1) nach einem der Ansprüche 5 bis 7, wobei die Anzeigeeinheit (1-2) eine Vielzahl von Inneneinheitsindikatoren in einem dritten Bereich auf dem Wartungsbildschirm (SCR10) anzeigt, die jeweils die Vielzahl der Inneneinheiten (154-1, 151-1, 151-2) anzeigen, und
der Kontroller (1-4) einen Verschwendungsindikator, der anzeigt, dass Energie verschwendet wird, innerhalb eines Inneneinheitsindikators anzeigt, der die erste Inneneinheit oder die zweite Inneneinheit unter der Vielzahl der Inneneinheitsindikatoren anzeigt, wenn die erste Inneneinheit oder die zweite Inneneinheit ermittelt wird.

9. Fernwartungsserver (1) nach einem der Ansprüche 1 bis 8, wobei die Kommunikationseinheit (1-3) eine Kommunikation mit einem lokalen Kontroller (100) durchführt, der jeweils an dem mindestens einen Wartungspunkt (30) vorgesehen ist, um die Klimaanlage (200) zu steuern, und
der Kontroller (1-4) die Klimaanlage (200) durch den lokalen Kontroller (100) steuert.

10. Fernwartungsserver (1) nach Anspruch 9, wobei die Kommunikationseinheit (1-3) die Kommunikation mit dem lokalen Kontroller (100) in einem ersten Kommunikationsmodus durchführt, und
der lokale Kontroller (100) die Kommunikation mit der Klimaanlage (200) in einem zweiten Kommunikationsmodus durchführt,
wobei der erste Kommunikationsmodus ein mobiles Kommunikationsnetzwerk und/oder ein Übertragungssteuerungsprotokoll/Internetprotokoll (TCP/IP) und/oder ein lokales Netzwerk (LAN) und/oder ein drahtloses LAN und/oder Wi-Fi und/oder ein drahtloses Breitband (Wibro) und/oder eine weltweite Interoperabilität zum Mikrowellenzugang (Wimax) ist, und
der zweite Kommunikationsmodus RS-485 ist.

11. Gesamtfernwartungssystem (10), das aufweist:
mindestens einen Wartungspunkt (30), der mit einer Klimaanlage (200) versehen ist, die eine Vielzahl von Inneneinheiten (154-1, 151-1, 151-2), die eine Klimatisierung durchführen, und mindestens eine Außeneinheit (154-2) aufweist, die mit den Inneneinheiten verbunden ist, um die Inneneinheiten zu betreiben; und
einem Fernwartungsserver (1), der konfiguriert ist, den mindestens einen Wartungspunkt (30) fernzuwarten,
wobei der Fernwartungsserver (1) ein Fernwartungsserver nach einem der Ansprüche 1 bis 10 ist.

12. Fernwartungsverfahren durch einen Fernwartungsserver zum Fernwarten von mindestens einem Wartungspunkt, der mit einer Klimaanlage versehen ist, die eine Vielzahl von Inneneinheiten, die eine Klimatisierung durchführen, und mindestens eine Außeneinheit aufweist, die mit den Inneneinheiten verbunden ist, um die Inneneinheiten zu betreiben,
wobei das Fernwartungsverfahren aufweist:
Ermitteln (S110) von einer ersten Inneneinheit, die während einer spezifischen Zeitspanne ununterbrochen betrieben wird, oder einer zweiten Inneneinheit, die während einer betriebslosen Zeitspanne betrieben wird, die dem mindestens einem Wartungspunkt entsprechen, unter der Vielzahl der Inneneinheiten, wenn eine Verschwendungsbetriebsart aktiviert ist; und
Übertragen (S120) eines Steuerbefehls zum Steuern des Betriebs der ermittelten ersten Inneneinheit oder zweiten Inneneinheit an den mindestens einen Wartungspunkt,
wobei der mindestens eine Wartungspunkt den Betrieb der ersten Inneneinheit und der zweiten Inneneinheit durch den Steuerbefehl stoppt oder mindestens eine einer Betriebsrate, einer Solltemperatur für die Vielzahl der Inneneinheiten und einer Verdichtungskapazität eines in der Klimaanlage enthaltenen Verdichters gemäß einem Steuersollwert steuert.

13. Fernwartungsverfahren nach Anspruch 12, wobei der mindestens eine Wartungspunkt eine Region ist, die einem Bauwerk und/oder einem Gebäude und/oder einem Laden und/oder einem Einkaufszentrum und/oder einer Schule entspricht, die durch den Fernwartungsserver gewartet, repariert und verwaltet werden.

## Revendications

1. Serveur de maintenance à distance (1) destiné à maintenir à distance au moins un point de maintenance (30) pourvu d'un climatiseur (200) comprenant une pluralité d'unités intérieures (154-1, 151-1, 151-2) effectuant une climatisation d'air et au moins une unité extérieure (154-2) reliée aux unités intérieures pour entraîner lesdites unités intérieures, ledit serveur de maintenance à distance (1) comprenant :
une unité de communication (1-3) prévue pour établir une communication avec ledit au moins un point de maintenance (30) ; et
un dispositif de commande (1-4) prévu pour commander l'unité de communication (1-3) afin de détecter une première unité intérieure mise en service de manière continue pendant une durée spécifique ou une deuxième unité intérieure mise en service pendant une durée de non-fonctionnement correspondant à au moins un point de maintenance (30) parmi la pluralité d'unités intérieures quand un mode de fonctionnement à perte est activé, et transmettre audit au moins un point de maintenance (30) une instruction de commande afin de commander le fonctionnement de la première unité intérieure ou de la deuxième unité intérieure détectée,
où le dispositif de commande (1-4) arrête le fonctionnement de la première unité intérieure et de la deuxième unité intérieure au moyen de l'instruction de commande ou commande une vitesse de fonctionnement et/ou une température définie pour la pluralité d'unités intérieures (154-1, 151-1, 151-2) et/ou une capacité de compression d'un compresseur compris dans le climatiseur en fonction d'une valeur de réglage de commande.

2. Serveur de maintenance à distance (1) selon la revendication 1, où ledit au moins un point de maintenance (30) est une zone correspondant à une construction et/ou un bâtiment et/ou un magasin et/ou un centre commercial et/ou un établissement scolaire, qui sont maintenus, réparés et administrés par le serveur de maintenance à distance (1).

3. Serveur de maintenance à distance (1) selon la revendication 1 ou la revendication 2, où la vitesse de fonctionnement est un rapport entre un nombre d'unités de la pluralité d'unités intérieures (154-1, 151-1, 151-2) et un nombre d'unités intérieures mises en service parmi la pluralité d'unités intérieures (154-1, 151-1, 151-2).

4. Serveur de maintenance à distance (1) selon l'une des revendications 1 à 3, où le dispositif de commande (1-4) règle une fréquence de fonctionnement du compresseur pour commander la capacité de compression.

5. Serveur de maintenance à distance (1) selon l'une des revendications 1 à 4, comprenant en outre :
une unité d'affichage (1-2) prévue pour afficher un écran de maintenance (SCR10) afin de maintenir ledit au moins un point de maintenance (30).

6. Serveur de maintenance à distance (1) selon la revendication 5, où l'unité d'affichage (1-2) affiche une information de commande, laquelle est une information associée à un état de commande et/ou à un résultat de commande comprenant au moins un des éléments suivants : si la première unité intérieure ou la deuxième unité intérieure est en arrêt de fonctionnement ou non, si la valeur de réglage de commande, ou la vitesse de fonctionnement, ou la température définie ou la capacité de compression sont commandées, dans une première zone sur l'écran de maintenance (SCR10).

7. Serveur de maintenance à distance (1) selon la revendication 5 ou la revendication 6, où l'unité d'affichage affiche une UI de réglage de commande, laquelle est une interface graphique d'utilisateur (GUI) pour la réception d'une entrée d'utilisateur activant le mode de fonctionnement à perte, la durée spécifique, la durée de non-fonctionnement et la valeur de réglage de commande, dans une deuxième zone sur l'écran de maintenance (SCR10).

8. Serveur de maintenance à distance (1) selon l'une des revendications 5 à 7, où l'unité d'affichage (1-2) affiche une pluralité d'indicateurs d'unité intérieure indiquant respectivement les unités de la pluralité d'unités intérieures (154-1, 151-1, 151-2), dans une troisième zone sur l'écran de maintenance (SCR10), et
le dispositif de commande (1-4) affiche un indicateur de perte indiquant un gaspillage de courant à l'intérieur d'un indicateur d'unité intérieure indiquant la première unité intérieure ou la deuxième unité intérieure parmi la pluralité d'indicateurs d'unité intérieure si la première unité intérieure ou la deuxième unité intérieure est détectée.

9. Serveur de maintenance à distance (1) selon l'une des revendications 1 à 8, où l'unité de communication (1-3) établit une communication avec un dispositif de commande local (100) prévu sur ledit au moins un point de maintenance (30) respectif, pour commander le climatiseur (200), et
le dispositif de commande (1-4) commande le climatiseur (200) par l'intermédiaire du dispositif de commande local (100).

10. Serveur de maintenance à distance (1) selon la revendication 9, où l'unité de communication (1-3) établit une communication avec le dispositif de commande local (100) dans un premier mode de communication, et
le dispositif de commande local (100) établit une communication avec le climatiseur (200) dans un deuxième mode de communication,
où le premier mode de communication est un réseau de communication mobile et/ou un protocole de contrôle de transmission/protocole Internet (TCP/IP) et/ou un réseau local radio (LAN) et/ou un Wireless LAN et/ou un réseau Wi-Fi et/ou un réseau à large bande sans fil (Wibro) et/ou un réseau d'interopérabilité mondiale pour accès hyperfréquence (Wimax), et le deuxième mode de communication est RS-485.

11. Système de maintenance totale (10), comprenant :
au moins un point de maintenance (30) pourvu d'un climatiseur (200) comprenant une pluralité d'unités intérieures (154-1, 151-1, 151-2) effectuant une climatisation d'air et au moins une unité extérieure (154-2) reliée aux unités intérieures pour entraîner les unités intérieures ; et
un serveur de maintenance à distance (1) destiné à maintenir à distance ledit au moins un point de maintenance (30),
où le serveur de maintenance à distance (1) est un serveur de maintenance à distance selon l'une des revendications 1 à 10.

12. Procédé de maintenance à distance par un serveur de maintenance à distance destiné à maintenir à distance au moins un point de maintenance pourvu d'un climatiseur comprenant une pluralité d'unités intérieures effectuant une climatisation d'air et au moins une unité extérieure reliée aux unités intérieures pour entraîner lesdites unités intérieures,
ledit procédé de maintenance à distance comprenant :
la détection (S110) d'une première unité intérieure mise en service de manière continue pendant une durée spécifique ou d'une deuxième unité intérieure mise en service pendant une durée de non-fonctionnement correspondant à au moins un point de maintenance parmi la pluralité d'unités intérieures quand un mode de fonctionnement à perte est activé ; et la transmission (S120) audit au moins un point de maintenance d'une instruction de commande afin de commander le fonctionnement de la première unité intérieure ou de la deuxième unité intérieure détectée,
où ledit au moins un point de maintenance arrête le fonctionnement de la première unité intérieure et de la deuxième unité intérieure au moyen de l'instruction de commande ou commande une vitesse de fonctionnement et/ou une température définie pour la pluralité d'unités intérieures et/ou une capacité de compression d'un compresseur compris dans le climatiseur en fonction d'une valeur de réglage de commande.

13. Procédé de maintenance à distance selon la revendication 12, où ledit au moins un point de maintenance est une zone correspondant à une construction et/ou un bâtiment et/ou un magasin et/ou un centre commercial et/ou un établissement scolaire, qui sont maintenus, réparés et administrés par le serveur de maintenance à distance.
